# EUROPEAN PATENT SPECIFICATION

(11) **EP 3 999 552 B1**
(45) Date of publication and mention of the grant of the patent: **05.03.2025**
(21) Application number: 20739683.9
(22) Date of filing: 14.07.2020
(51) Int. Cl.: C08C 19/22, C08C 19/36, C08C 19/44, C08F 236/10

(54) **CARBOXYTERMINATED DIENE RUBBERS**
CARBOXYTERMINIERTE DIENKAUTSCHUKE
CAOUTCHOUCS DE DIÈNE À TERMINAISON CARBOXY

(30) Priority: 16.07.2019 EP 19186585
(43) Date of publication of application: 25.05.2022
(73) Proprietor: ARLANXEO Deutschland GmbH, 41540 Dormagen (DE)
(72) Inventor: STEINHAUSER, Norbert, 41539 Dormagen (DE)
(86) International application number: PCT/EP2020/069846
(87) International publication number: WO 2021/009154

(56) References cited:
- EP-A1- 2 796 471
- US-A- 3 242 129
- US-A- 4 465 809

## Description

The invention pertains to carboxyterminated diene rubbers, their production and use.

Important properties of tire treads are good adhesion to dry and wet surfaces, low rolling resistance and high abrasion resistance. It is very difficult to improve the skid resistance of a tire without simultaneously reducing rolling resistance and abrasion resistance. Low rolling resistance is important for low fuel consumption, and high abrasion resistance is the decisive factor for high mileage.

The wet slip resistance and rolling resistance of a tire tread largely depend on the dynamic mechanical properties of the rubbers used in compound manufacture. Rubbers with high rebound elasticity at higher temperatures (60 °C to 100 °C) are used for the tread to reduce rolling resistance. On the other hand, rubbers with a high damping factor at low temperatures (0 to 23 °C) or low rebound elasticity in the range 0 °C to 23 °C are advantageous for improving wet grip. In order to meet this complex requirement profile, compounds of various rubbers are used in the tread. Usually mixtures of one or more rubbers with a relatively high glass transition temperature, such as styrene-butadiene rubber, and one or more rubbers with a relatively low glass transition temperature, such as polybutadiene with a high 1,4-cis content or a styrene-butadiene rubber with a low styrene and vinyl content or a polybutadiene produced in solution with an average 1,4-cis and low vinyl content are used.

Unsaturated anionically polymerized solution rubbers, such as solution polybutadiene and solution styrene-butadiene rubbers, have advantages over corresponding emulsion rubbers in the production of low rolling resistance tire treads. The advantages include the controllability of the vinyl content and the associated glass transition temperature and molecule branching. In practical application, this results in particular advantages in the relationship between wet slip resistance and rolling resistance of the tire. Significant contributions to energy dissipation and thus to rolling resistance in tire treads result from free polymer chain ends and from the reversible build-up and breakdown of the filler network, which is formed by the filler used in the tire tread compound (mostly silica and/or carbon black).

The introduction of functional groups at the polymer chain ends and/or at the polymer chain beginnings enables a physical or chemical bonding of these polymer chain ends or beginnings to the filler surface. This restricts their mobility and thus reduces energy dissipation under dynamic stress on the tread. At the same time, these functional groups can improve the dispersion of the filler in the tire tread, which can lead to a weakening of the filler network and thus to a further reduction in rolling resistance.

To this end, numerous methods for end-group modification of diene rubbers have been developed. For example, EP 0 180 141 A1 describes the use of 4,4'-bis(dimethyl-amino)-benzophenone or N-methylcaprolactam as functionalization reagents. The use of ethylene oxide and N-vinylpyrrolidone is also known from EP 0 864 606 A1. A number of other possible functionalization reagents are listed in US 4,417,029.

Methods for introducing functional groups at the polymer chain start by means of functional anionic polymerization initiators are described for example in EP 0 513 217 A1 and EP 0 675 140 A1 (initiators with protected hydroxyl group), US 2008/0308204 A1 (initiators containing thioethers) as well as in US 5,792,820, EP 0 590 490 A1 and EP 0 594 107 A1 (alkali amides of secondary amines as polymerization initiators).

In particular, silanes and cyclosiloxanes having in total at least two halogen and/or alkoxy and/or aryloxy substituents on silicon are well suited for the end group functionalization of diene rubbers, since one of the substituents mentioned on the Si atom can be easily replaced by an anionic diene polymer chain end in a rapid substitution reaction and the further substituent or substituents mentioned above on Si is or are available as a functional group which can interact with the filler of the tire tread compound, if appropriate after hydrolysis. Examples of such silanes can be found in US 3,244,664, US 4,185,042, EP 0 778 311 A1 and US 2005/0203251 A1.

As a rule, these silanes have functional groups which are bonded directly to the Si atom or connected to Si via a spacer and which can interact with the surface of the silica filler in the rubber compound. These functional groups are usually alkoxy groups or halogens directly attached to Si, or tertiary amino substituents attached to Si via a spacer. Disadvantages of these silanes are the possible reaction of several anionic polymer chain ends per silane molecule, elimination of interfering components and coupling under formation of Si-O-Si bonds during processing and storage. The introduction of carboxy groups by means of these silanes is not described.

The carboxy group as a strongly polar, bidentate ligand can interact particularly well with the surface of the silica filler in the rubber mixture. Methods for introducing carboxy groups along the polymer chain of diene rubbers produced in solution are known and described for example in DE 26 531 44 A1, EP 1 000 971 A1, EP 1 050 545 A1, WO 2009/034001 A1. These methods have several disadvantages, for example that long reaction times are required, that only an incomplete conversion of the functionalization reagents takes place and that a change of the polymer chains occurs by side reactions such as branching. In addition, these methods do not enable the particularly effective functionalization of the polymer chain ends.

The introduction of carboxy groups at the chain ends of diene rubbers is also described, for example in US 3,242,129 by reacting the anionic polymer chain ends with CO₂. The disadvantage of this method is that the polymer solution has to be brought into contact with gaseous CO₂, which is difficult due to the high viscosity and the resulting poor mixing. In addition, difficult to control coupling reactions occur due to the reaction of more than one polymer chain end at the carbon atom of CO₂. The reaction of the carbanionic polymer chain ends with cyclic anhydrides is also unsuitable for the introduction of carboxy groups, since here too the coupling reaction predominates due to the reaction of more than one chain end per cyclic anhydride molecule. This coupling can be avoided by sequential reaction of the carbanionic polymer chain ends first with ethylene oxide or propylene oxide and subsequent reaction of the now alkoxide polymer chain ends with a cyclic anhydride (US 4,465,809). Here, too, however, the disadvantage is that gaseous and highly toxic ethylene oxide or propylene oxide must be added to the highly viscous rubber solution. In addition, the reaction of the alkoxide chain ends with the cyclic anhydride forms ester bonds that are susceptible to hydrolysis and can be cleaved during processing and later use.

US 4465809 discloses the termination using an epoxide and a cyclic acid anhydride. EP 2796471 pertains to styrene-butadiene polymers terminated with a silane-containing carboxyl group. US 3242129 discloses the preparation of carboxy-terminated polymers using carbon dioxide. None of those references discloses or teaches in any way the use use or benefits of carboxyend-groups according to formula (I) of this invention.

WO 2014/173706 A1 describes a method for introducing carboxy end groups to diene rubbers by avoiding coupling reactions by using silalactones. Further methods for coupling-free carboxy termination of diene rubbers are not known.

It was an object of the invention to provide carboxyterminated diene rubbers and a method for the production thereof, which do not have the disadvantages of the state of the art and in particular make it possible to use easily accessible raw materials for functionalization.

To solve this problem, end group functionalized diene rubbers are proposed which have a carboxy group at the polymer chain end which is linked to the polymer chain via two amide groups, namely -C(=O)NR₃-R₁-NR₂-C(=O)-R₄-, as shown in formula (I), 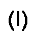 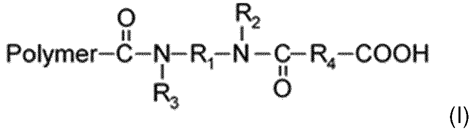 wherein
R₂, R₃ are identical or different and represent saturated or unsaturated organic radicals which may contain one or more heteroatoms, preferably independently of one another selected from O, N, S or Si; and
R₁, R₄ are identical or different and represent saturated or unsaturated divalent organic radicals which, in addition to C and H, may contain one or more heteroatoms, preferably independently of one another selected from O, N, S or Si.

The end group functionalized diene rubbers according to the invention may preferably be present as carboxylates according to formula (II), 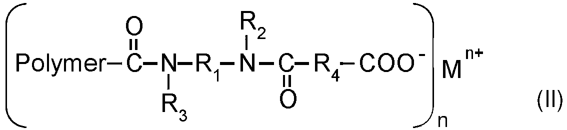 wherein
R₂, R₃ are identical or different and represent saturated or unsaturated organic radicals which may contain one or more heteroatoms, preferably independently of one another selected from O, N, S or Si;
R₁, R₄ are identical or different and represent saturated or unsaturated divalent organic radicals which, in addition to C and H, may contain one or more heteroatoms, preferably independently of one another selected from O, N, S or Si;
n is an integer from 1 to 4; and
M is a metal or semi-metal of valency 1 to 4, preferably Li, Na, K, Mg, Ca, Zn, Fe, Co, Ni, Al, Nd, Ti, Sn, Si, Zr, V, Mo or W.

In preferred embodiments,
R₁ and R₄ are, independently from one another, selected from the group consisting of
   (i) -C₁-C₆-alkylene-, saturated or unsaturated, unsubstituted, mono- or polysubstituted;
   (ii) -C₁-C₆-heteroalkylene-, saturated or unsaturated, unsubstituted, mono- or polysubstituted; and
   (iii) 6-14-membered arylene, unsubstituted, mono- or polysubstituted;
   and/or
R₂ and R₃ are, independently from one another, selected from the group consisting of
   (i) -C₁-C₂₄-alkyl, saturated or unsaturated, unsubstituted, mono- or polysubstituted;
   (ii) -C₁-C₂₄-heteroalkyl, saturated or unsaturated, unsubstituted, mono- or polysubstituted;
   (iii) 6-24-membered aryl, unsubstituted, mono- or polysubstituted, wherein said 6-24-membered aryl is optionally connected through -C₁-C₆-alkylene- or -C₁-C₆-heteroalkylene-, in each case saturated or unsaturated, unsubstituted, mono- or polysubstituted;
   (iv) 5-24-membered heteroaryl, unsubstituted, mono- or polysubstituted; wherein said 5-24-membered heteroaryl is optionally connected through -C₁-C₆-alkylene- or -C₁-C₆-heteroalkylene-, in each case saturated or unsaturated, unsubstituted, mono- or polysubstituted;
   (v) 3-24-membered cycloalkyl, saturated or unsaturated, unsubstituted, mono- or polysubstituted; wherein said 3-24-membered cycloalkyl is optionally connected through -C₁-C₆-alkylene- or -C₁-C₆-heteroalkylene-, in each case saturated or unsaturated, unsubstituted, mono- or polysubstituted; and
   (vi) 3-24-membered heterocycloalkyl, saturated or unsaturated, unsubstituted, mono- or polysubstituted; wherein said 3-24-membered heterocycloalkyl is optionally connected through -C₁-C₆-alkylene- or -C₁-C₆-heteroalkylene-, in each case saturated or unsaturated, unsubstituted, mono- or polysubstituted;
wherein *"mono- or polysubstituted'* in each case independently means substituted with one or more substituents independently of one another selected from -F, -Cl, -Br, -I, -CN, =O, - CF₃, -CF₂H, -CFH₂, -CF₂Cl, -CFCl₂, -C₁-C₁₈-alkyl, saturated or unsaturated, unsubstituted and -C₁-C₁₈-heteroalkyl, saturated or unsaturated, unsubstituted.

In other preferred embodiments,
R₁ is (i) -C₁-C₆-alkylene-, saturated or unsaturated, unsubstituted; preferably (ii) -C₁-C₂-alkylene-, saturated or unsaturated, unsubstituted; and/or
R₂ and R₃ are, independently from one another, (i) -C₁-C₆-alkyl, saturated or unsaturated, unsubstituted; preferably (ii) -C₁-C₂-alkyl, saturated or unsaturated, unsubstituted; and/or
R₄ is (i) -C₁-C₆-alkylene-, saturated or unsaturated, unsubstituted, mono- or polysubstituted; preferably (ii) -C₁-C₃-alkylene-, saturated or unsaturated, unsubstituted, mono- or polysubstituted;
wherein in each case *"mono- or polysubstituted"* means substituted with one or more substituents independently of one another selected from
-F, -Cl, -Br, -I, -CN, -CF₃, -CF₂H, -CFH₂, -CF₂Cl, -CFCl₂,
-C₁-C₁₈-alkyl, saturated or unsaturated, unsubstituted, and
-C₁-C₁₈-heteroalkyl, saturated or unsaturated, unsubstituted.

Preferably, *"mono- or polysubstituted'* in the context of the above preferred embodiments means substituted with one or more substituents independently of one another selected from
-C₁-C₁₈-alkyl, saturated, unsubstituted, and
-C₁-C₆-alkyl-Si(O-C₁-C₆-alkyl)₃, wherein in each case -C₁-C₆-alkyl is saturated, unsubstituted.

In a particularly preferred embodiment of the carboxyterminated polymer according to the invention,
- R₁ is -C₁-C₂-alkylene-, saturated or unsaturated, unsubstituted; and/or
- R₂ is -C₁-C₂-alkyl, saturated or unsaturated, unsubstituted; and/or
- R₃ is -C₁-C₂-alkyl, saturated or unsaturated, unsubstituted; and/or
- R₄ is -C₁-C₃-alkylene-, saturated or unsaturated, unsubstituted, mono- or polysubstituted;
wherein in each case *"mono- or polysubstituted"* means substituted with one or more substituents independently of one another selected from C₁-C₁₈-alkyl, saturated or unsaturated, unsubstituted, and C₁-C₁₈-heteroalkyl, saturated or unsaturated, unsubstituted.

The following definitions apply:
The term *"polymer"* as used herein corresponds to the same-named residue contained in the compounds according to formulae (I) and (II).

The term *"alkyl, saturated or unsaturated'* as used herein encompasses saturated alkyl as well as unsaturated alkyl such as alkenyl, alkynyl, and the like. The term *"alkyl"* as used herein means normal, secondary, or tertiary, linear or branched hydrocarbon with no site of unsaturation. Examples are methyl, ethyl, 1-propyl (n-propyl), 2-propyl (iPr), 1-butyl, 2-methyl-1-propyl(i-Bu), 2-butyl (s-Bu), 2-dimethyl-2-propyl (t-Bu), 1-pentyl (n-pentyl), 2-pentyl, 3-pentyl, 2-methyl-2-butyl, 3-methyl-2-butyl, 3-methyl-1-butyl, 2-methyl-1-butyl, 1-hexyl, 2-hexyl, 3-hexyl, 2-methyl-2-pentyl, 3-methyl-2-pentyl, 4-methyl-2-pentyl, 3-methyl-3-pentyl, 2-methyl-3-pentyl, 2,3-dimethyl-2-butyl, and 3,3-dimethyl-2-butyl. The term *"alkenyl"* as used herein means normal, secondary or tertiary, linear or branched hydrocarbon with at least one site (usually 1 to 3, preferably 1) of unsaturation, namely a carbon-carbon, sp2 double bond. Examples include, but are not limited to: ethylene or vinyl (-CH=CH₂), allyl (-CH₂CH=CH₂), and 5-hexenyl (-CH₂CH₂CH₂CH₂CH=CH₂). The double bond may be in the cis or trans configuration. The term *"alkynyf'* as used herein means normal, secondary, tertiary, linear or branched hydrocarbon with at least one site (usually 1 to 3, preferably 1) of unsaturation, namely a carbon-carbon, sp triple bond. Examples include, but are not limited to: ethynyl (-C≡CH), and 1-propynyl (propargyl, -CH₂C≡CH).

The term *"alkylene, saturated or unsaturated'* as used herein encompasses saturated alkylene as well as unsaturated alkylene such as alkenylene, alkynylene, alkenynylene and the like. The term *"alkylene"* as used herein means saturated, linear or branched chain hydrocarbon radical having two monovalent radical centers derived by the removal of two hydrogen atoms from the same or two different carbon atoms of a parent alkane. Typical alkylene radicals include, but are not limited to: methylene (-CH₂-), 1,2-ethyl (-CH₂CH₂-), 1,3-propyl (-CH₂CH₂CH₂-), 1,4-butyl (-CH₂CH₂CH₂CH₂-), and the like. The term *"alkenylene"* as used herein means linear or branched chain hydrocarbon radical with at least one site (usually 1 to 3, preferably 1) of unsaturation, namely a carbon-carbon, sp2 double bond, and having two monovalent radical centers derived by the removal of two hydrogen atoms from the same or two different carbon atoms of a parent alkene. The term *"alkynylene"* as used herein means linear or branched chain hydrocarbon radical with at least one site (usually 1 to 3, preferably 1) of unsaturation, namely a carbon-carbon, sp triple bond, and having two monovalent radical centers derived by the removal of two hydrogen atoms from the same or two different carbon atoms of a parent alkyne.

The term *"heteroalkyl, saturated or unsaturated'* as used herein encompasses saturated heteroalkyl as well as unsaturated heteroalkyl such as heteroalkenyl, heteroalkynyl, heteroalkenynyl and the like. The term *"heteroalkyl"* as used herein means linear or branched chain alkyl wherein one or more carbon atoms (usually 1, 2 or 3) are replaced by a heteroatom, i.e. an oxygen, nitrogen, sulfur or silicon atom, with the proviso that said chain may not contain two adjacent O atoms or two adjacent S atoms. This means that one or more -CH₃ of said alkyl can be replaced by -NH₂ and/or that one or more -CH₂- of said alkyl can be replaced by -NH-, -O-, -S- or -Si-. The S atoms in said chains may be optionally oxidized with one or two oxygen atoms, to afford sulfoxides and sulfones, respectively. Furthermore, the heteroalkyl groups in the benzofurane derivatives of the invention can contain an oxo or thio group at any carbon or heteroatom that will result in a stable compound. Exemplary heteroalkyl groups include, but are not limited to, alcohols, alkyl ethers (such as for example -methoxy, -ethoxy, -butoxy,...), primary, secondary, and tertiary alkyl amines, amides, ketones, esters, alkyl sulfides, and alkyl sulfones. The term *"heteroalkenyl"* means linear or branched chain alkenyl wherein one or more carbon atoms (usually 1, 2 or 3) are replaced by an oxygen, nitrogen or sulfur atom, with the proviso that said chain may not contain two adjacent O atoms or two adjacent S atoms. The term heteroalkenyl thus comprises imines, -O-alkenyl, -NH-alkenyl, -N(alkenyl)₂, -N(alkyl)(alkenyl), and -S-alkenyl. The term *"heteroalkynyf"* as used herein means linear or branched chain alkynyl wherein one or more carbon atoms (usually 1, 2 or 3) are replaced by an oxygen, nitrogen or sulfur atom, with the proviso that said chain may not contain two adjacent O atoms or two adjacent S atoms. The term heteroalkynyl thus comprises -cyano, -O-alkynyl, - NH-alkynyl, -N(alkynyl)₂, -N(alkyl)(alkynyl), -N(alkenyl)(alkynyl), and -S-alkynyl.

The term *"heteroalkylene, saturated or unsaturated"* as used herein encompasses saturated heteroalkylene as well as unsaturated heteroalkylene such as heteroalkenylene, heteroalkynylene, heteroalkenynylene and the like. The term *"heteroalkylene"* as used herein means linear or branched chain alkylene wherein one or more carbon atoms (usually 1, 2 or 3) are replaced by a heteroatom, i.e. an oxygen, nitrogen or sulfur atom, with the proviso that said chain may not contain two adjacent O atoms or two adjacent S atoms. The term *"heteroalkenylene"* as used herein means linear or branched chain alkenylene wherein one or more carbon atoms (usually 1, 2 or 3) are replaced by an oxygen, nitrogen or sulfur atom, with the proviso that said chain may not contain two adjacent O atoms or two adjacent S atoms. The term *"heteroalkynylene"* as used herein means linear or branched chain alkynylene wherein one or more carbon atoms (usually 1, 2 or 3) are replaced by an oxygen, nitrogen or sulfur atom, with the proviso that said chain may not contain two adjacent O atoms or two adjacent S atoms.

The term *"cycloalkyl, saturated or unsaturated"* as used herein encompasses saturated cycloalkyl as well as unsaturated cycloalkyl such as cycloalkenyl, cycloalkynyl and the like. The term *"cycloalkyl"* as used herein and unless otherwise stated means a saturated cyclic hydrocarbon radical, such as for instance cyclopropyl, cyclobutyl, cyclopentyl, cyclohexyl, cycloheptyl, cyclooctyl, norbornyl, fenchyl, decalinyl, adamantyl and the like. The term *"cycloalkenyl"* as used herein means a non-aromatic cyclic hydrocarbon radical with at least one site (usually 1 to 3, preferably 1) of unsaturation, namely a carbon-carbon, sp2 double bond. Examples include, but are not limited to cyclopentenyl and cyclohexenyl. The double bond may be in the cis or trans configuration. The term *"cycloalkynyl"* as used herein means a non-aromatic cyclic hydrocarbon radical with at least one site (usually 1 to 3, preferably 1) of unsaturation, namely a carbon-carbon, sp triple. An example is cyclohept-1-yne. Fused systems of a cycloalkyl ring with a heterocycloalkyl ring are considered as heterocycloalkyl irrespective of the ring that is bound to the core structure. Fused systems of a cycloalkyl ring with an aryl ring are considered as aryl irrespective of the ring that is bound to the core structure. Fused systems of a cycloalkyl ring with a heteroaryl ring are considered as heteroaryl irrespective of the ring that is bound to the core structure.

The term *"heterocycloalkyl, saturated or unsaturated"* as used herein encompasses saturated heterocycloalkyl as well as unsaturated non-aromatic heterocycloalkyl including at least one heteroatom, i.e. an N, O, or S as ring member. The term *"heterocycloalkyl"* as used herein and unless otherwise stated means *"cycloalkyl"* wherein one or more carbon atoms (usually 1, 2 or 3) are replaced by an oxygen, nitrogen or sulfur atom, with the proviso that said chain may not contain two adjacent O atoms or two adjacent S atoms. The term *"heterocycloalkenyl"* as used herein and unless otherwise stated means *"cycloalkenyl"* wherein one or more carbon atoms (usually 1, 2 or 3) are replaced by an oxygen, nitrogen or sulfur atom, with the proviso that said chain may not contain two adjacent O atoms or two adjacent S atoms. The term *"heterocycloalkynyf'* as used herein and unless otherwise stated means *"cycloalkynyf'* wherein one or more carbon atoms (usually 1, 2 or 3) are replaced by an oxygen, nitrogen or sulfur atom, with the proviso that said chain may not contain two adjacent O atoms or two adjacent S atoms. Examples of saturated and unsaturated heterocycloalkyl include but are not limited to azepane, 1,4-oxazepane, azetane, azetidine, aziridine, azocane, diazepane, dioxane, dioxolane, dithiane, dithiolane, imidazolidine, isothiazolidine, isoxalidine, morpholine, oxazolidine, oxepane, oxetane, oxirane, piperazine, piperidine, pyrazolidine, pyrrolidine, quinuclidine, tetrahydrofurane, tetrahydropyrane, tetrahydrothiopyrane, thiazolidine, thietane, thiirane, thiolane, thiomorpholine, indoline, dihydrobenzofurane, dihydrobenzothiophene, 1,1-dioxothiacyclohexane, 2-azaspiro[3.3]heptane, 2-oxaspiro[3.3]heptane, 7-azaspiro[3.5]nonane, 8-azabicyclo-[3.2.1]octane, 9-azabicyclo[3.3.1]nonane, hexahydro-1H-pyrrolizine, hexahydrocyclo-penta[c]pyrrole, octahydrocyclopenta[c]pyrrole, and octahydropyrrolo[1,2-a]pyrazin. Further heterocycloalkyls in the meaning of the invention are described in Paquette, Leo A. "Principles of Modern Heterocyclic Chemistry" (W.A. Benjamin, New York, 1968), particularly Chapters 1, 3, 4, 6, 7, and 9; "The Chemistry of Heterocyclic Compounds, A series of Monographs" (John Wiley & Sons, New York, 1950 to present), in particular Volumes 13, 14, 16, 19, and 28; Katritzky, Alan R., Rees, C.W. and Scriven, E. "Comprehensive Heterocyclic Chemistry" (Pergamon Press, 1996); and J. Am. Chem. Soc. (1960) 82:5566. When the heterocycloalkyl contains no nitrogen as ring member, it is typically bonded through carbon. When the heterocycloalkyl contains nitrogen as ring member, it may be bonded through nitrogen or carbon. Fused systems of heterocycloalkyl ring with a cycloalkyl ring are considered as heterocycloalkyl irrespective of the ring that is bound to the core structure. Fused systems of a heterocycloalkyl ring with an aryl ring are considered as heterocycloalkyl irrespective of the ring that is bound to the core structure. Fused systems of a heterocycloalkyl ring with a heteroaryl ring are considered as heteroaryl irrespective of the ring that is bound to the core structure.

The term *"aryl"* as used herein means an aromatic hydrocarbon. Typical aryl groups include, but are not limited to 1 ring, or 2 or 3 rings fused together, radicals derived from benzene, naphthalene, anthracene, biphenyl, and the like. Fused systems of an aryl ring with a cycloalkyl ring are considered as aryl irrespective of the ring that is bound to the core structure. Fused systems of an aryl ring with a heterocycloalkyl ring are considered as heterocycloalkyl irrespective of the ring that is bound to the core structure. Thus, indoline, dihydrobenzofurane, dihydrobenzothiophene and the like are considered as heterocycloalkyl according to the invention. Fused systems of an aryl ring with a heteroaryl ring are considered as heteroaryl irrespective of the ring that is bound to the core structure.

The term *"arylene"* as used herein means bivalent groups derived from arenes by removal of a hydrogen atom from two ring carbon atoms. A synonym is arenediyl groups. Examples of arylene include but are not limited to phenylene and benzene-1,2-diyl.

The term *"heteroaryl"* as used herein means an aromatic ring system including at least one heteroatom, i.e. N, O, or S as ring member of the aromatic ring system. Examples of heteroaryl include but are not limited to benzimidazole, benzisoxazole, benzoazole, benzodioxole, benzofurane, benzothiadiazole, benzothiazole, benzothiophene, carbazole, cinnoline, dibenzofurane, furane, furazane, imidazole, imidazopyridine, indazole, indole, indolizine, isobenzofurane, isoindole, isoquinoline, isothiazole, isoxazole, naphthyridine, oxadiazole, oxazole, oxindole, phthalazine, purine, pyrazine, pyrazole, pyridazine, pyridine, pyrimidine, pyrrole, quinazoline, quinoline, quinoxaline, tetrazole, thiadiazole, thiazole, thiophene, triazine, triazole, and [1,2,4]triazolo[4,3-a]pyrimidine.

The term *"heteroarylene"* as used herein means bivalent groups derived from heteroarenes by removal of a hydrogen atom from two ring carbon atoms.

The end group functionalized diene rubbers according to the invention are prepared or obtainable by a copolymerization of conjugated dienes with vinylaromatic monomers and subsequent reaction with suitable functionalization reagents, wherein the conjugated diene comprises 1,3-butadiene and wherein the vinylaromatic monomer comprises styrene.

The preferred conjugated dienes that can be copolymerized with 1,3-butadiene areisoprene, 1,3-pentadiene, 2,3-dimethylbutadiene, 1-phenyl-1,3-butadiene, 1,3-hexadiene, myrcene, ocimenes and/or farnesenes.

For example, o-, m- and/or p-methylstyrene, p-tert-butylstyrene, -methylstyrene, vinyl naphthalene, divinylbenzene, trivinylbenzene and/or divinylnaphthalene can be used as additional vinylaromatic comonomers.

In a particularly preferred embodiment, the carboxyterminated polymer according to the invention comprises a "polymer" that is obtainable by copolymerization of 1,3-butadiene with styrene.

These polymers are preferably prepared or obtainable by anionic solution polymerization or by polymerization using coordination catalysts. Coordination catalysts in this context are Ziegler-Natta catalysts or monometallic catalyst systems. Preferred coordination catalysts are those based on Ni, Co, Ti, Zr, Nd, V, Cr, Mo, W or Fe.

Initiators for anionic solution polymerization are those based on alkali or alkaline earth metals, e.g. methyl lithium, ethyl lithium, isopropyllithium, n-butyllithium, sec-butyllithium, pentyllithium, n-hexyllithium, cyclohexyllithium, octyllithium, decyl-lithium, 2-(6-lithio-n-hexoxy)tetrahydropyran, 3-(tert-butyldimethylsiloxy)-1-propyllithium, phenyllithium, 4-butylphenyllithium, 1-naphthyllithium, p-toluyllithium and allyllithium compounds, derived from tertiary N-allylamines such as [1-(dimethylamino)-2-propenyl]lithium, [1-[bis(phenylmethyl)amino]-2-propenyl]lithium, [1-(diphenylamino)-2-propenyl]lithium, [1-(1-pyrrolidinyl)-2-propenyl]lithium, Lithium amides of secondary amines such as lithium pyrrolidide, lithium piperidide, lithium hexamethylene imide, lithium 1-methyl imidazolidide, lithium 1-methyl piperazide, lithium morpholide, lithium dicyclohexylamide, lithium dibenzyl amide, lithium diphenyl amide. These allyllithium compounds and these lithium amides can also be prepared in situ by reacting an organolithium compound with the respective tertiary N-allylamines or with the respective secondary amines. Di- and polyfunctional organolithium compounds can also be used, for example 1,4-dilithiobutane, dilithium piperazide. Preferably n-butyllithium and sec-butyllithium are used.

In addition, the well-known randomizers and control agents can be used for the microstructure of the polymer, for example diethyl ether, di-n-propylether, diisopropyl ether, di-n-butylether, ethylene glycol dimethyl ether, Ethylene glycol diethyl ether, ethylene glycol di-n-butyl ether, ethylene glycol di-tert-butyl ether, diethylene glycol dimethyl ether, diethylene glycol diethyl ether, diethylene glycol di-n-butyl ether, diethylene glycol di-tert-butyl ether, 2-(2-ethoxyethoxy)-2-methyl-propane, triethylene glycol dimethyl ether, tetrahydrofuran, ethyltetrahydrofurfuryl ether, hexyltetrahydrofurfuryl ether, 2,2-bis(2-tetrahydrofuryl)propane, dioxane, trimethylamine, triethylamine, N,N,N',N'-tetramethyl-ethylenediamine, N-methylmorpholine, N-ethylmorpholine, 1,2-dipiperi-dinoethane, 1,2-dipyrrolidinoethane, 1,2-dimorpholinoethane and potassium and sodium salts of alcohols, phenols, carboxylic acids, sulphonic acids.

Such solution polymerizations are well known and described, for example, in I. Franta, Elastomers and Rubber Compounding Materials; Elsevier 1989, pages 113-131, in Houben-Weyl, Methoden der Organischen Chemie, Thieme Verlag, Stuttgart, 1961, volume XIV/1 pages 645 to 673 or in volume E 20 (1987), pages 114 to 134 and pages 134 to 153 as well as in Comprehensive Polymer Science, Vol. 4, Part II (Pergamon Press Ltd., Oxford 1989), pages 53-108.

The production of the copolymers preferably takes place in a solvent. The preferred solvents for polymerization are inert aprotic solvents such as aliphatic hydrocarbons such as isomeric butanes, pentanes, hexanes, heptanes, octanes, decanes and cyclopentane, methylcyclopentane, cyclohexane, methylcyclohexane, ethylcyclohexane or 1,4-dimethylcyclohexane or alkenes such as 1-butene or aromatic hydrocarbons such as benzene, toluene, ethylbenzene, xylene, diethylbenzene or propylbenzene. These solvents can be used individually or in combination. Preferred solvents are cyclohexane, methylcyclopentane and n-hexane. Mixing with polar solvents is also possible.

The amount of solvent in the invention process is usually in the range from 100 to 1000 g, preferably in the range from 200 to 700 g, based on 100 g of the total amount of monomer used. However, it is also possible to polymerize the monomers used in the absence of solvents.

Polymerization can be carried out by first introducing the monomers and the solvent and then starting the polymerization by adding the initiator or catalyst. It is also possible to polymerize in a feed process where the polymerization reactor is filled by adding monomers and solvents, the initiator or catalyst being introduced or added with the monomers and solvent. Variations are possible, such as the introduction of the solvent in the reactor, the addition of the initiator or catalyst and then the addition of the monomers. Furthermore, polymerization can be carried out in a continuous mode. Further monomer and solvent addition during or at the end of polymerization is possible in all cases.

The polymerization time can vary from a few minutes to several hours. Polymerization is usually carried out within a period of 10 minutes to 8 hours, preferably 20 minutes to 4 hours. It can be carried out both at normal pressure and at elevated pressure (from 1 to 10 bar).

It was surprisingly found that by successively adding 1) one or more cyclic urea derivatives and 2) one or more cyclic carboxylic acid anhydrides as functionalization reagents, carboxyterminated polymers can be produced which do not have the disadvantages of the state of the art.

The cyclic urea derivatives are compounds of the formula (III) 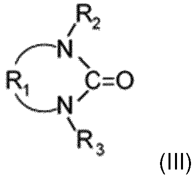 where
R₁ is a saturated or unsaturated divalent organic radical which, in addition to C and H**,** may contain one or more heteroatoms, preferably independently of one another selected from O, N**,** S or Si; and
R₂, R₃ are identical or different and represent saturated or unsaturated organic radicals which may contain one or more heteroatoms, preferably independently of one another selected from O, N**,** S or Si;
   where preferably,
R₁ is a -C₂H₄-, -C₃H₆- or -C₄H₈-alkylene- radical; and
R₂, R₃ are identical or different and are -(C₁-C₂₄)-alkyl, -(C₃-C₂₄)-cycloalkyl, -(C₆-C₂₄)-aryl, - (C₆-C₂₄)-alkaryl or -(C₆-C₂₄)-aralkyl radicals which may contain one or more heteroatoms, preferably independently of one another selected from O, N**,** S or Si.

Preferably, R₁ is -CH₂-CH₂- and/or R₂ and R₃ are both -CH₃.

Preferred examples of compounds of formula (III) include but are not limited to:
1,3-Dimethyl-2-imidazolidinone (1), 1,3-diethyl-2-imidazolidinone (2), 1-methyl-3-phenyl-2-imidazolidinone (3), 1,3-diphenyl-2-imidazolidinone (4), 1,3-dimethyl-2-imidazolidinone (3), 1,3-dimethyl-2-imidazolidinone (3), 1,3-dimethyl-2-imidazolidinone (3), 1,3-dimethyl-2-imidazolidinone (3), 1,3-dimethyl-2-imidazolidinone (3), 1,3-dimethyl-2-imidazolidinone (4), 1,3-dimethyl-2-imidazolidinone (4), 1,3-dimethyl-2-imidazolidinone (3), 3-diethenyl-2-imidazolidinone (5), 1,3,4-trimethyl-2-imidazolidinone (6), 1,3-bis(trimethylsilyl)-2-imidazolidinone (7), 1,3-dihydro-1,3-dimethyl-2H-imidazol-2-one (8), tetrahydro-1,3-dimethyl-2(1H)-pyrimidinone (9), tetrahydro-1-methyl-3-phenyl-2(1H)-pyrimidinone (10), tetrahydro-1,3,5-trimethyl-2(1H)-pyrimidinone (11), tetrahydro-3,5-dimethyl-4H-1,3,5-oxadiazin-4-one (12), tetrahydro-1,3,5-trimethyl-1,3,5-triazin-2(1H)-one (13), hexahydro-1,3-dimethyl-2H-1,3-diazepin-2-one (14):

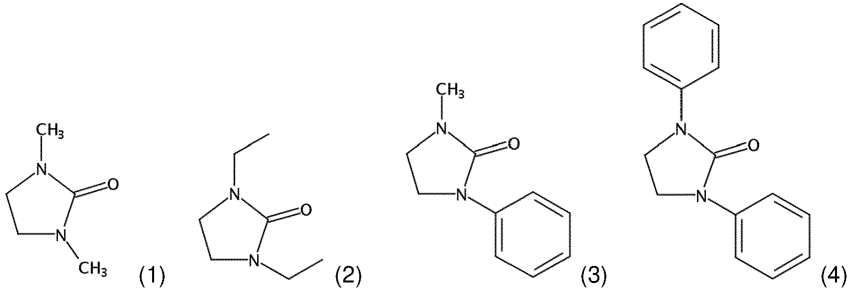

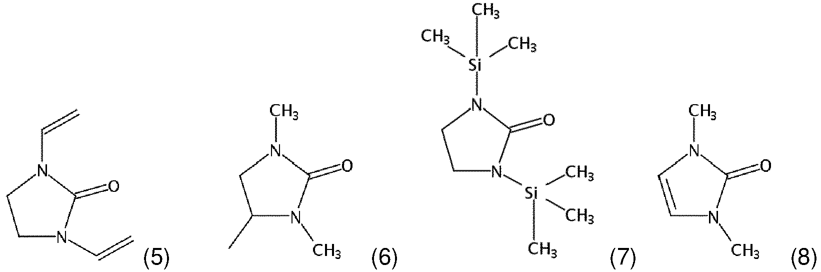

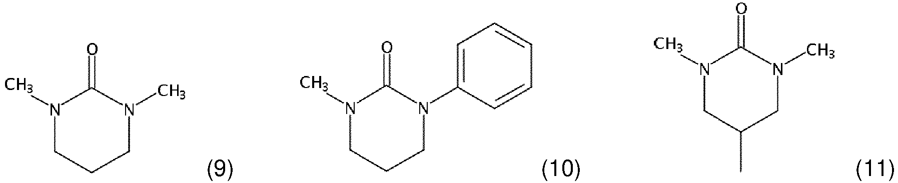

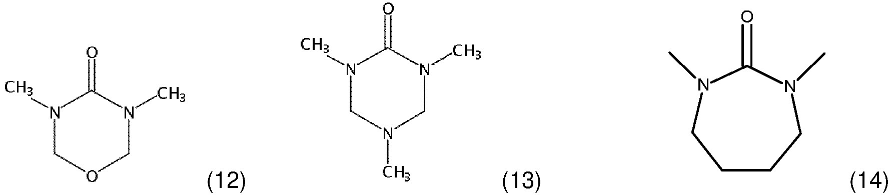

A particularly preferred example of compounds of formula (III) is 1,3-Dimethyl-2-imidazolidinone (1):

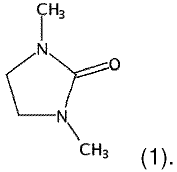

Cyclic carboxylic anhydrides are compounds of formula (IV) 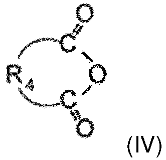 where
R₄ is a saturated or unsaturated divalent organic radical which, in addition to C and H, may contain one or more heteroatoms, preferably independently of one another selected from O, N, S or Si.

Preferably, R₄ is -CH₂-CHCₖH₂ₖ₊₁- wherein k is an integer of from 8 to 16; -CH₂CH((CH₂)₁₋₅Si(OC₁-C₄-alkyl)₃); -CH=CC₁-C₄-alkyl-, or -(CH₂)₂₋₄-.

Preferred examples of compounds of the formula (IV) include but are not limited to:
malonic anhydride (15), 3-methyl-2,4-oxetanedione (16), succinic anhydride (17), methyl succinic anhydride (18), 2,3-dimethyl succinic anhydride (19), tetrapropenyl succinic anhydride (20), isooctadecyl succinic anhydride (21), 3-(trimethoxysilyl)propyl succinic anhydride (22), 3-(triethoxysilyl)propyl succinic anhydride (23), itaconic anhydride (24), maleic anhydride (25), citraconic anhydride (26), dimethyl maleic anhydride (27), phthalic anhydride (28), glutaric anhydride (29), 3-methyl glutaric anhydride (30), 3,3-dimethyl glutaric anhydride (31), 3-tert-butyldimethylsilyl)oxy]glutaric anhydride (32), 3-oxoglutaric anhydride (33), diglycolic anhydride (34), 2,2'-thiodiglycolic anhydride (35), 4-methyl-2,6-morpholine-dione (36), 1H-2-benzopyran-1,3(4H)-dione (37), naphthalic anhydride (38), adipic anhydride (39), pimelic anhydride (40):

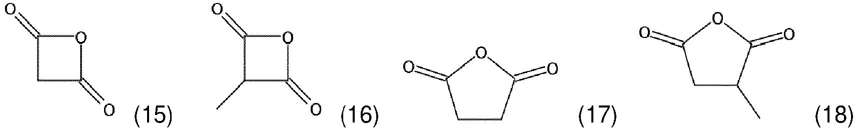

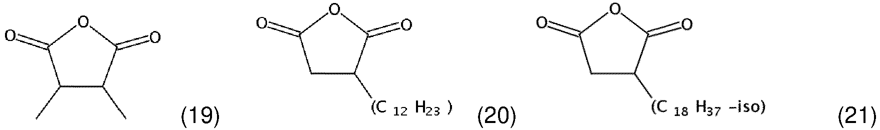

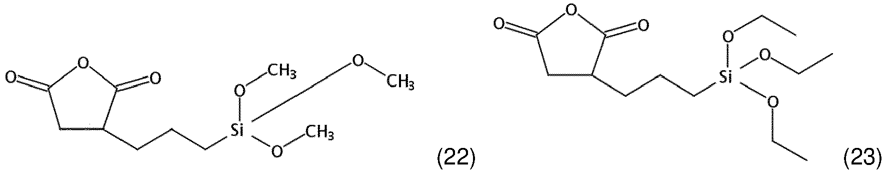

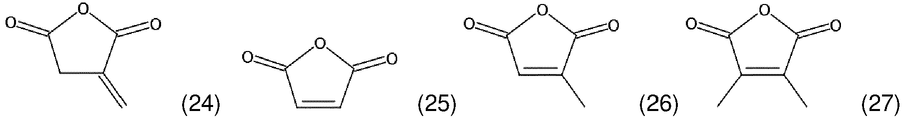

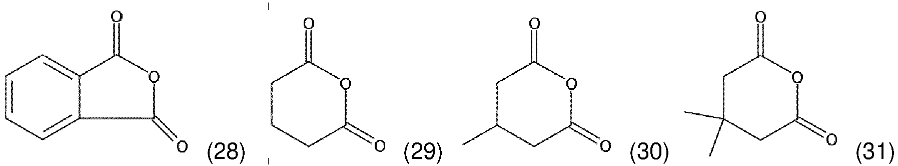

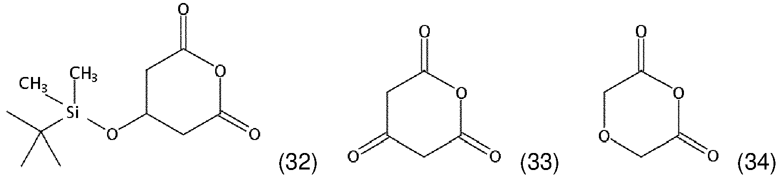

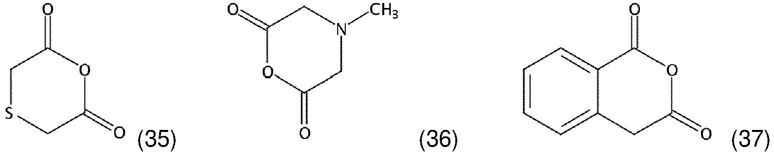

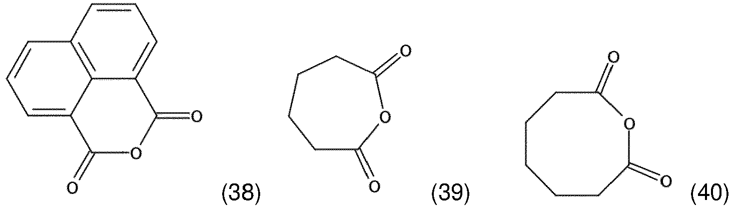

Particularly preferred examples of compounds of the formula (IV) include but are not limited to tetrapropenyl succinic anhydride (20), 3-(trimethoxysilyl)propyl succinic anhydride (22), citraconic anhydride (26), glutaric anhydride (29):

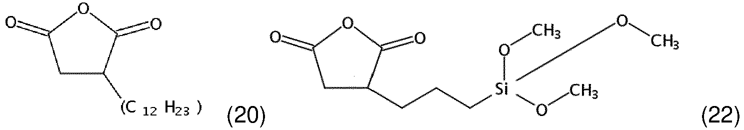

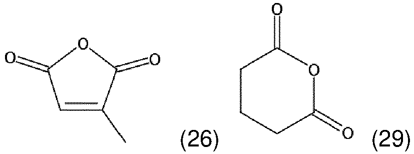

It was found that the end group functionalized diene rubbers according to the invention can be prepared by successive reaction of reactive polymer chain ends from anionic diene polymerization with first a cyclic urea derivative and subsequently with a cyclic carboxylic acid anhydride and optionally, subsequent protonation of the resulting carboxylate end group to the carboxy end group.

In a particularly preferred embodiment of the carboxyterminated polymer according to the invention,
- the "polymer" is obtainable by copolymerization of 1,3-butadiene with styrene;
- R₁ is -C₁-C₃-alkylene-, saturated or unsaturated, unsubstituted;
- R₂ is -C₁-C₂-alkyl, saturated or unsaturated, unsubstituted;
- R₃ is -C₁-C₂-alkyl, saturated or unsaturated, unsubstituted; and
- R₄ is -C₁-C₃-alkylene-, saturated or unsaturated, unsubstituted, mono- or polysubstituted;
wherein in each case *"mono- or polysubstituted"* means substituted with one or more substituents independently of one another selected from -C₁-C₁₈-alkyl, saturated or unsaturated, unsubstituted, and -C₁-C₁₈-heteroalkyl, saturated or unsaturated, unsubstituted; preferably selected from -C₁-C₁₈-alkyl, saturated or unsaturated, unsubstituted or -C₁-C₆-alkyl-Si(O-C₁-C₆-alkyl)₃ saturated or unsaturated, unsubstituted.

In a particularly preferred embodiment of the carboxyterminated polymer according to the invention,
- the "polymer" is obtainable by copolymerization of 1,3-butadiene with styrene;
- R₁ is -CH₂CH₂-;
- R₂ is -CH₃;
- R₃ is -CH₃; and
- R₄ is -CH₂-CHCₖH₂ₖ₊₁- wherein k is an integer of from 8 to 16; -CH₂CH((CH₂)₁₋₅Si(OC₁-C₄-alkyl)₃); -CH=CC₁-C₄-alkyl-, or -(CH₂)₂₋₄-.

In a particularly preferred embodiment of the carboxyterminated polymer according to the invention,
- the "polymer" is obtainable by copolymerization of 1,3-butadiene with styrene;
- R₁ is -CH₂CH₂-;
- R₂ is -CH₃;
- R₃ is -CH₃; and
- R₄ is -CH₂-CHC₁₂H₂₃-, -CH₂CH(CH₂CH₂CH₂Si(OCH₃)₃), -CH=CCH₃-, or -CH₂CH₂-CH₂-.

Another aspect of the invention relates to the successive use of first a cyclic urea derivative and then a cyclic carboxylic acid anhydride as functionalizing reagents for the preparation of the invention end group-functionalized diene rubbers with end groups of the formulae (I) or (II) as described herein.

The end group functionalized polymers according to the invention preferably have average molecular weights (number average, Mn) of 10,000 to 2,000,000 g/mol, preferably of 100,000 to 1,000,000 g/mol and glass transition temperatures of -110 °C to +20 °C, preferably of -110 °C to 0 °C, and Mooney viscosities [ML 1+4 (100 °C)] of 10 to 200, preferably of 30 to 150 Mooney units.

Another aspect of the invention is a process for the preparation of the inventive end group functionalized polymers, according to which one or more compounds of the formula (III), as pure substance, solution or suspension, are first added to polymers with reactive polymer chain ends. Addition preferably takes place after completion of polymerization, but may also take place before complete monomer conversion. The reaction of compounds of formula (III) with polymers having reactive polymer chain ends preferably takes place at the temperatures normally used for polymerization. The reaction times for the reaction of compounds of the formula (III) with the reactive polymer chain ends may range from a few minutes to several hours.

The amount of these compounds can be selected so that all reactive polymer chain ends react with compounds of the formula (III), or an undersupply of these compounds can be used. The amounts of compounds of formula (III) used can cover a wide range. The preferred amounts are in the range from 0.3 to 2 molar equivalents, particularly preferably in the range from 0.6 to 1.5 molar equivalents based on the amount of initiator or catalyst used for polymerization.

In the subsequent step, compounds of the formula (IV) are then added as pure material, solution or suspension to the polymers obtained from the preceding step by adding compounds of the formula (III). The reaction of compounds of formula (IV) preferably takes place at the temperatures normally used for polymerization. The reaction times for the reaction of compounds of formula (IV) may range from a few minutes to several hours.

The quantities of compounds of formula (IV) used can cover a wide range. The preferred amounts are in the range from 0.3 to 2 molar equivalents, particularly preferably in the range from 0.6 to 1.5 molar equivalents based on the amount of compounds of the formula (III) used.

In addition to compounds of the formula (III) and the formula (IV), the coupling reagents typical for anionic diene polymerization can also be used for reaction with the reactive polymer chain ends. Examples of such coupling reagents are silicon tetrachloride, methyltrichlorosilane, dimethyldichlorosilane, tin tetrachloride, dibutyltin dichloride, tetraalkoxysilanes, ethylene glycol diglycidyl ether, 1,2,4-tris(chloromethyl)benzene. Such coupling reagents may be added before, together with or after the compounds of formula (III).

After addition of compounds of the formula (III) and formula (IV) and optionally of coupling reagents, the usual antioxidants, such as sterically hindered phenols, aromatic amines, phosphites, thioethers, are preferably added before or during the working up of the carboxyl-terminated or carboxyl-terminated polymers according to the invention. Furthermore, the usual extender oils used for diene rubbers such as TDAE (Treated Distillate Aromatic Extract)-, MES (Mild Extraction Solvates)-, RAE (Residual Aromatic Extract)-, TRAE (Treated Residual Aromatic Extract)-, naphthenic and heavy naphthenic oils can be added. It is also possible to add fillers such as carbon black and silica, rubbers and rubber additives.

The solvent can be removed from the polymerization process by the usual methods, such as distillation, stripping with steam or applying a vacuum, if necessary at higher temperatures.

A further aspect of invention is the use of the end group functionalized polymers according to the invention for the production of vulcanizable rubber compositions.

Preferably, these vulcanizable rubber compositions contain other rubbers, fillers, rubber chemicals, processing aids and extender oils.

Additional rubbers are, for example, natural rubber and synthetic rubber. If present, their quantity is usually in the range from 0.5 to 95 % by weight, preferably in the range from 10 to 80 % by weight, based on the total polymer quantity in the mixture. The amount of additional rubber added again depends on the intended use of the invention. Examples of such synthetic rubbers are BR (polybutadiene), acrylic acid alkyl ester copolymers, IR (polyisoprene), E-SBR (styrene-butadiene copolymers produced by emulsion polymerization), S-SBR (styrene-butadiene copolymers produced by solution polymerization), IIR (isobutylene-isoprene copolymers), NBR (butadiene-acrylonitrile copolymers), HNBR (partially or completely hydrogenated NBR rubber), EPDM (ethylenepropylene-diene terpolymers) and mixtures of these rubbers. Natural rubber, E-SBR and S-SBR with a glass temperature above -60°C, polybutadiene rubber with a high cis content (> 90%) produced with catalysts based on Ni, Co, Ti or Nd, polybutadiene rubber with a vinyl content of up to 80% and mixtures thereof are of particular interest for the manufacture of automotive tires.

All known fillers used in the rubber industry can be considered as fillers for the rubber compositions according to the invention. These include both active and inactive fillers.

Examples include but are not limited to:
- highly disperse silicas, produced for example by precipitation of solutions of silicates or flame hydrolysis of silicon halides with specific surfaces of 5-1000, preferably 20-400 m²/g (BET surface) and primary particle sizes of 10-400 nm. Silicas may also be present as mixed oxides with other metal oxides such as Al, Mg, Ca, Ba, Zn, Zr, Ti oxides;
- synthetic silicates such as aluminum silicate, alkaline earth silicate such as magnesium silicate or calcium silicate, with BET surfaces of 20-400 m²/g and primary particle diameters of 10-400 nm;
- natural silicates such as kaolin, montmorillonite and other naturally occurring silicas;
- glass fibers and glass fiber products (mats, strands) or microspheres;
- metal oxides such as zinc oxide, calcium oxide, magnesium oxide, aluminum oxide;
- metal carbonates, such as magnesium carbonate, calcium carbonate, zinc carbonate;
- metal hydroxides, such as aluminum hydroxide, magnesium hydroxide;
- metal sulfates, such as calcium sulfate, barium sulfate;
- carbon black: The carbon blacks to be used are carbon blacks produced by the flame soot, channel, furnace, gas soot, thermal, acetylene soot or arc process and have BET surfaces of 9 - 200 m2/g, for example SAF-, ISAF-LS-, ISAF-HM-, ISAF-LM-, ISAF-HS-, CF-, SCF-, HAF-LS-, HAF-, HAF-HS-, FF-HS-, SPF-, XCF-, FEF-LS-, FEF-, FEF-HS-, GPF-HS-, GPF-, APF-, SRF-LS-, SRF-LM-, SRF-HS-, SRF-HM- and MT- soot or according to ASTM N110-, N219-, N220-, N231-, N234-, N242-, N294-, N326-, N327-, N330-, N332-, N339-, N347-, N351-, N356, N358, N375, N472, N539, N550, N568, N650, N660, N754, N762, N765, N774, N787 and N990 carbon blacks;
- rubber gels, in particular those based on BR, E-SBR and/or polychloroprene with particle sizes from 5 to 1000 nm.

Highly disperse silicas and/or carbon blacks are preferred as fillers.

These fillers can be used alone or in a mixture. In a particularly preferred form, the rubber compositions contain as fillers a mixture of light fillers, such as highly dispersed silicas, and carbon black, the mixing ratio of light fillers to carbon black being from 0.01:1 to 50:1, preferably from 0.05:1 to 20:1 parts by weight.

The fillers are used in quantities ranging from 10 to 500 parts by weight based on 100 parts by weight rubber. Quantities in the range of 20 to 200 parts by weight are preferred.

In a further embodiment of the invention, the rubber compositions also contain rubber auxiliaries which, for example, improve the processing properties of the rubber compositions, serve to crosslink the rubber compositions, improve the physical properties of the vulcanizates produced from the rubber compositions corresponding to the invention for their special purpose, improve the interaction between the rubber and the filler or serve to bond the rubber to the filler.

Rubber auxiliaries include crosslinking agents such as sulfur or sulfur-supplying compounds, as well as reaction accelerators, antioxidants, heat stabilizers, light stabilizers, ozone stabilizers, processing aids, plasticizers, tackifiers, blowing agents, dyes, pigments, waxes, extenders, organic acids, silanes, retarders, metal oxides, extender oils such as DAE (Distillate Aromatic Extract)-, TDAE (Treated Distillate Aromatic Extract)-, MES (Mild Extraction Solvates)-, RAE (Residual Aromatic Extract)-, TRAE (Treated Residual Aromatic Extract)-, naphthenic and heavy naphthenic oils as well as activators.

The total amount of rubber additives ranges from 1 to 300 parts by weight, based on 100 parts by weight of total rubber. Preferably quantities in the range of 5 to 150 parts by weight of rubber auxiliaries are used.

The vulcanizable rubber compositions can be produced in a single-stage or a multi-stage process, with 2 to 3 mixing stages being preferred. For example, sulfur and accelerator can be added in a separate mixing stage on a roller, with temperatures in the range of 30 °C to 90 °C being preferred. Sulfur and accelerator are preferably added in the final mixing stage.

Aggregates suitable for the production of vulcanizable rubber compositions include rollers, kneaders, internal mixers or mixing extruders.

Another aspect of the invention relates to the use of end-group-functionalized polymers having end groups of the formula (I) or (II) as described herein for the preparation of vulcanizable rubber compositions.

Another aspect of the invention relates to vulcanizable rubber compositions containing a) end-group-functionalized polymers having end groups of the formula (I) or (II) as described herein; optionally together with b) stabilizers, extender oils, fillers, rubbers and/or further rubber auxiliaries.

A further aspect of the invention is the use of the vulcanizable rubber compositions according to the invention for the production of rubber vulcanizates, in particular for the production of tires, in particular tire treads, which exhibit particularly low rolling resistance with high wet slip resistance and abrasion resistance.

The vulcanizable rubber compositions in accordance with the invention are also suitable for the manufacture of molded articles, for example for the manufacture of cable sheaths, hoses, drive belts, conveyor belts, roll linings, shoe soles, sealing rings and damping elements.

Another aspect of the invention relates to a molded article, in particular a tire, obtainable by the above use, i.e. prepared from a vulcanizable rubber composition according to the invention involving vulcanization.

The following examples serve to explain the invention without limiting its scope.

### Examples

The number-average molecular weight Mn, the polydispersity Mw/Mn and the degree of coupling of the styrene-butadiene rubbers were determined using GPC (PS calibration).

The Mooney viscosity ML(1+4)100 °C was measured according to DIN 52523/52524.

The vinyl and styrene content was determined by FTIR spectroscopy on rubber films.

The glass transition temperature Tg was determined using DSC from the 2nd heating curve at a heating rate of 20 K/min.

The loss factors tan δ were measured at 0 °C and tan δ at 60 °C to determine the temperature-dependent dynamic-mechanical properties. An Eplexor device (Eplexor 500 N) from Gabo was used for this purpose. The measurements were carried out in accordance with DIN 53513 at 10 Hz on Ares strips in the temperature range from -100 °C to 100 °C. The Eplexor 500 N was used for this purpose. To determine the strain-dependent dynamic-mechanical properties, ΔG' was determined as the difference between the shear modulus at 0.5% strain and the shear modulus at 15% strain as well as the maximum loss factor tan δmax. These measurements were determined according to DIN53513-1990 on an MTS elastomer test system on cylinder specimens (20×6 mm) with 2 mm compression at a temperature of 60 °C and a measuring frequency of 10 Hz in the strain range from 0.1% to 40%.

The rebound elasticity was determined at 60 °C according to DIN 53512.

### Styrene-butadiene copolymers

### Example 1: Synthesis of styrene-butadiene copolymer, non-functionalized (comparative example)

An inert 20L reactor was filled with 8.5 kg hexane, 6.1 mmol 2,2-bis(2-tetrahydrofuryl)-propane and 11.1 mmol n-butyllithium (as a 23% solution by weight in hexane) and heated to 41 °C. The heating circuit was then closed and 1185 g of 1,3-butadiene and 315 g of styrene were added simultaneously.

It was polymerized under stirring for 40 minutes whereas the reactor contents reached a peak temperature of 66 °C. Subsequently, 11.1 mmol n-octanol was added to stop the anionic polymer chain ends. The rubber solution was drained, stabilized by adding 3 g Irganox^{®} 1520 (2,4-bis(octylthiomethyl)-6-methylphenol) and the solvent removed by stripping with steam. The rubber crumbs were dried at 65 °C for 16 h in a vacuum drying oven.

The number-average molecular weight Mn, the molecular weight distribution Mw/Mn, the degree of coupling (all from the GPC measurement with PS calibration), the Mooney viscosity ML1+4@100°C, the vinyl and styrene content (from the FTIR measurement, data in % by weight, based on the total polymer), as well as the glass transition temperature Tg (from the DSC measurement) were determined on the dried rubber crumbs. The values are listed in Table 1.

### Example 2: Functionalization of styrene-butadiene copolymer by reaction with 1,3-dimethyl-2-imidazolidinone (comparative example)

The procedure was the same as in example 1. Instead of n-octanol, however, the amount of the functionalization reagent 1,3-dimethyl-2-imidazolidinone (1) equimolar to n-butyllithium was added and the reactor content then stirred for a further 5 minutes. The rubber solution was then drained, stabilized by adding 3 g Irganox^{®} 1520 (2,4-bis(octylthiomethyl)-6-methylphenol) and the solvent removed by stripping with steam. The rubber crumbs were dried at 65 °C for 16 h in a vacuum drying oven.

### Example 3: Functionalization of styrene-butadiene copolymer by reaction with citraconic anhydride (comparative example)

The procedure was the same as in example 2. As functionalization reagent, the equimolar amount to n-butyl-lithium of citraconic anhydride (26) was added.

### Example 4: Functionalization of styrene-butadiene copolymer by successive reaction with 1,3-dimethyl-2-imidazolidinone and citraconic anhydride (example according to invention)

The procedure was the same as in example 2. For functionalization, the amount of 1,3-dimethyl-2-imidazolidinone (1) equimolar to n-butyl-lithium was added first. It was stirred for 5 minutes, then the equimolar amount to n-butyllithium of citraconic anhydride (26) was added.

### Example 5: Functionalization of styrene-butadiene copolymer by reaction with tetrapropenyl succinic anhydride (comparative example)

The procedure was the same as in example 2. As functionalization reagent, the amount of tetrapropenyl succinic anhydride (20) equimolar to n-butyl lithium was added.

### Example 6: Functionalization of styrene-butadiene copolymer by successive reaction with 1,3-dimethyl-2-imidazolidinone and tetrapropenyl succinic anhydride (example according to invention)

The procedure was the same as in example 2. For functionalization, the amount of 1,3-dimethyl-2-imidazolidinone (1) equimolar to n-butyl-lithium was added first. It was stirred for 5 minutes, then the equimolar amount to n-butyllithium of tetrapropenyl succinic anhydride (20) was added.

### Example 7: Functionalization of styrene-butadiene copolymer by reaction with glutaric anhydride (comparative example)

The procedure was the same as in example 2. The amount of glutaric anhydride (29) equimolar to n-butyl-lithium was added as functionalization reagent.

### Example 8: Functionalization of styrene-butadiene copolymer by successive reaction with 1,3-dimethyl-2-imidazolidinone and glutaric anhydride (example according to invention)

The procedure was the same as in example 2. For functionalization, the amount of 1,3-dimethyl-2-imidazolidinone (1) equimolar to n-butyl-lithium was added first. It was stirred for 5 minutes and then the equimolar amount to n-butyllithium of glutaric anhydride (29) was added.

### Example 9: Functionalization of styrene-butadiene copolymer by reaction with 3-(trimethoxysilyl)propyl succinic anhydride (comparative example)

The procedure was the same as in example 2. As functionalization reagent, the amount of 3-(trimethoxysilyl)propyl succinic anhydride (22) equimolar to n-butyl lithium was added.

### Example 10: Functionalization of styrene-butadiene copolymer by successive reaction with 1,3-dimethyl-2-imidazolidinone and 3-(trimethoxysilyl)-propyl succinic anhydride (example according to invention)

The procedure was the same as in example 2. For functionalization, the amount of 1,3-dimethyl-2-imidazolidinone (1) equimolar to n-butyl-lithium was added first. It was stirred for 5 minutes, then the equimolar amount to n-butyllithium of 3-(trimethoxysilyl)propyl succinic anhydride (22) was added.

The polymer properties of the styrene-butadiene copolymers from examples 1-10 are summarized in Table 1. Table 1 shows that the carboxy-terminated polymers of examples 4, 6, 8 and 10, prepared by successive addition of the two functionalization reagents according to formula (III) and (IV), according to the invention, have significantly reduced coupling degrees compared to the polymers of examples 3, 5, 7 and 9, prepared by addition of functionalization reagents according to formula (IV) without prior addition of a functionalization reagent according to formula (III). At similar molecular weight, polydispersity and coupling levels as the polymers of comparison examples 1 and 2, the carboxy terminated polymers of examples 4, 6, 8 and 10 according to invention exhibit significantly higher Mooney viscosities. This can be explained by the association formation of the carboxyterminated polymers via the carboxy or carboxylate end groups in the undiluted state (relevant for Mooney measurement), which is no longer effective in diluted solution (relevant for GPC measurement).

### Rubber compounds

Tire tread rubber compounds containing the styrene-butadiene copolymers of examples 1-10 were produced. The components are listed in Table 2. The components (without sulfur and accelerator) were mixed in a 1.5 L kneader. The components sulfur and accelerator were mixed in on a roller at 40 °C. The individual steps in the preparation of the mixture are listed in Table 3.

**Table 1: Properties of the styrene-butadiene copolymers according to Examples 1-10**

| **S-SBR from Example** | **functionalizat ion reagent according to formula (III)** | **functionalizat ion reagent according to formula (IV)** | **Mₙ** [kg/mol] | **M_{w} / Mₙ** | **Degree of coupling** [%] | **ML1+4** [MU] | **vinyl-content** [wt.-%] | **styrene-content** [wt.-%] | **Tg** [°C] |
|---|---|---|---|---|---|---|---|---|---|
| **1** (comparative) | - | - | 275 | 1.15 | 0 | 54 | 49.8 | 21.2 | -24.7 |
| **2** (comparative) | (1) | - | 261 | 1.19 | 1 | 57 | 50.9 | 21.1 | -23.6 |
| **3** (comparative) | - | (26) | 254 | 1.52 | 42 | 81 | 50.5 | 20.9 | -23.5 |
| **4** (inventive) | (1) | (26) | 200 | 1.28 | 1 | 76 | 50.1 | 21.0 | -25.1 |
| **5** (comparative) | - | (20) | 241 | 1.66 | 51 | 75 | 50.0 | 21.0 | -24.3 |
| **6** (inventive) | (1) | (20) | 238 | 1.29 | 4 | 67 | 49.9 | 21.4 | -24.2 |
| **7** (comparative) | - | (29) | 248 | 1.64 | 51 | 72 | 50.5 | 20.3 | -25.2 |
| **8** (inventive) | (1) | (29) | 264 | 1.20 | 3 | 83 | 51.3 | 21.3 | -22.8 |
| **9** (comparative) | - | (22) | 365 | 3.23 | 72 | 80 | 49.6 | 21.0 | -25.4 |
| **10** (inventive) | (1) | (22) | 239 | 1.95 | 17 | 72 | 49.3 | 21.0 | -26.0 |

**Table 2: Components of tire tread rubber compounds**

| (Specifications in phr: parts by weight per 100 parts by weight rubber) | |
|---|---|
| Styrene-butadiene copolymer | 70 |
| High-cis polybutadiene (BUNA CB 24 from Arlanxeo Deutschland GmbH) | 30 |
| Silica (Ultrasil^{®} 7000) | 90 |
| Carbon black (Vulcan^{®} J/N 375) | 7 |
| TDAE oil (Vivatec 500) | 36.3 |
| Processing aid (Aflux 37) | 3 |
| Stearic acid (Edenor C 18 98-100) | 1 |
| Antioxidant (Vulkanox^{®} 4020/LG der Lanxess Deutschland GmbH) | 2 |
| Antioxidant (Vulkanox^{®} HS/LG der Lanxess Deutschland GmbH) | 2 |
| Zink oxide (Zinkweiß Rotsiegel) | 3 |
| Light protection wax (Antilux 654) | 2 |
| Silane (Si 69^{®} from Evonik) | 7.2 |
| Diphenylguanidine (Rhenogran DPG-80) | 2.75 |
| Sulfenamide (Vulkacit^{®} NZ/EGC from Lanxess Deutschland GmbH) | 1.6 |
| Sulphur (Mahlschwefel 90/95 Chancel) | 1.6 |
| Sulfonamide (Vulkalent^{®} E/C) | 0.2 |

**Table 3: Preparation**

| | | |
|---|---|---|
| Step 1: Mixing in a 1.5 litre kneader | 0 seconds | Addition of polymers |
| | 30 seconds | Addition of 2/3 silica, 2/3 silane, stearic acid, wax, antioxidant, carbon black |
| | 90 seconds | Addition of residual silica and silane |
| | 150 seconds | Addition of zinc oxide |
| | 240 seconds | Heat up to 150°C, hold at temperature for 3 min |
| | 420 seconds | Ejection |
| Step 2: Mixing on the roller | Cut the sheet three times left and right followed by 3 revolutions at 40°C and a nip of 4 mm | |
| Step 3: | 24 hours storage at 24°C | |
| Step 4: Mixing in a 1.5 litre kneader | 0 seconds | Addition of the compound from step 3 |
| | 30 seconds | Heat up to 150°C, hold at temperature for 3 min |
| | 210 seconds | Ejection |
| Step 5: Mixing on the roller | Addition of sulphur and accelerator, cut the sheet three times left and right followed by 3 rounds at 40°C and a nip of 4 mm | |

The rubber compounds were vulcanized at 160 °C for 20 minutes. The physical properties of the corresponding vulcanizates 11-20 are listed in Table 4. The vulcanizate properties of the vulcanized rubber compound from comparison example 11 with the non-functionalized styrene-butadiene copolymer as the compound component are given an index of 100. All values greater than 100 in Table 4 indicate a corresponding percentage improvement of the respective test property.

**Table 4: Properties of vulcanizates**

| Vulcanizate Example | contains S-SBR from Example | Tan δ at 0 °C | Tan δ at 60 °C | Tan δ Maximum | ΔG' | rebound elasticity at 60 °C |
|---|---|---|---|---|---|---|
| 11 (comparative) | 1 | 100 | 100 | 100 | 100 | 100 |
| 12 (comparative) | 2 | 109 | 106 | 107 | 121 | 101 |
| 13 (comparative) | 3 | 108 | 105 | 105 | 125 | 102 |
| 14 (inventive) | 4 | 106 | 110 | 109 | 129 | 107 |
| 15 (comparative) | 5 | 103 | 105 | 107 | 130 | 100 |
| 16 (inventive) | 6 | 107 | 126 | 112 | 154 | 105 |
| 17 (comparative) | 7 | 105 | 112 | 105 | 129 | 98 |
| 18 (inventive) | 8 | 114 | 119 | 111 | 136 | 102 |
| 19 (comparative) | 9 | 116 | 108 | 107 | 143 | 108 |
| 20 (inventive) | 10 | 115 | 114 | 108 | 159 | 111 |

The rebound elasticity at 60 °C, the loss factor tan δ at 60 °C from the temperature-dependent dynamic-mechanical measurement as well as the tan δ maximum and the modulus difference G' between low and high strain from the strain-dependent dynamic-mechanical measurement are indicators for the rolling resistance in the tire. The loss factor tan δ at 0 °C is an indicator for the wet slip resistance of the tire.

As can be seen from Table 4, all vulcanizates containing functionalized diene rubbers are characterized by improved values for the wet grip indicator and the rolling resistance indicators. The vulcanizates from the inventive examples 14, 16, 18 and 20 have better properties than the vulcanizates from the corresponding examples 13, 15, 17 and 19, in which styrene-butadiene rubbers were used which were only reacted with cyclic anhydrides.

## Claims

1. A carboxy-terminated polymer according to general formula (I), 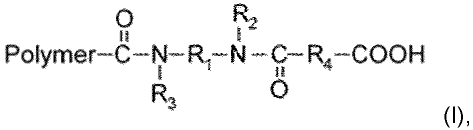
wherein the polymer is a diene rubber and contains at least one carbon-carbon double bond and wherein
R₂, R₃ are identical or different and represent saturated or unsaturated organic radicals which may contain one or more heteroatoms selected from the group consisting of O, N, S and Si; and
R₁, R₄ are identical or different and represent saturated or unsaturated divalent organic radicals which, in addition to C and H, may contain one or more heteroatoms another selected from the group consisting of O, N, S and Si, and
wherein the polymer is obtainable by a copolymerization of conjugated dienes and vinyl aromatic monomers wherein the conjugated dienes comprise 1,3-butadiene and the vinyl aromatic monomers comprise styrene.

2. The carboxy-terminated polymer according to claim 1, wherein the polymer is obtainable by a copolymerization of 1,3-butadiene with styrene.

3. The carboxy-terminated polymer according to any one of the preceding claims, wherein
- R₁ is selected from the group consisting of
(i) a -C₁-C₆-alkylene- that is saturated or unsaturated and that is either unsubstituted, mono- or polysubstituted;
(ii) a -C₁-C₆-heteroalkylene- that is saturated or unsaturated and that is unsubstituted, mono- or polysubstituted;
(iii) a 6 to 14-membered arylene that is unsubstituted, mono- or polysubstituted;
- R₂ is selected from the group consisting of
(i) a -C₁-C₂₄-alkyl that is saturated or unsaturated and that is unsubstituted, mono- or polysubstituted; or
(ii) a -C₁-C₂₄-heteroalkyl that is saturated or unsaturated and that is unsubstituted, mono- or polysubstituted;
(iii) a 6 to 24-membered aryl that is unsubstituted, mono- or polysubstituted, wherein said 6 to 24-membered aryl is optionally connected through a -C₁-C₆-alkylene- or a -C₁-C₆-heteroalkylene-, which in each case is saturated or unsaturated and which is unsubstituted, mono- or polysubstituted;
(iv) a 5 to 24-membered heteroaryl that is unsubstituted, mono- or polysubstituted, wherein said 5 to 24-membered heteroaryl is optionally connected through a -C₁-C₆-alkylene- or a -C₁-C₆-heteroalkylene-, which in each case is saturated or unsaturated and which is unsubstituted, mono- or polysubstituted;
(v) a 3 to 24-membered cycloalkyl that is saturated or unsaturated and that is unsubstituted, mono- or polysubstituted, wherein said 3 to 24-membered cycloalkyl is optionally connected through a -C₁-C₆-alkylene- or a -C₁-C₆-heteroalkylene-, which in each case is saturated or unsaturated and which is unsubstituted, mono- or polysubstituted; and
(vi) a 3 to 24-membered heterocycloalkyl, that is saturated or unsaturated and that is unsubstituted, mono- or polysubstituted, wherein said 3 to 24-membered heterocycloalkyl is optionally connected through -C₁-C₆-alkylene- or -C₁-C₆-heteroalkylene-, which in each case is saturated or unsaturated and which is unsubstituted, mono- or polysubstituted;
- R₃ is selected from the group consisting of
(i) -C₁-C₂₄-alkyl that is saturated or unsaturated and that is unsubstituted, mono- or polysubstituted;
(ii) -C₁-C₂₄-heteroalkyl that is saturated or unsaturated and that is unsubstituted, mono- or polysubstituted;
(iii) 6 to24-membered aryl that is unsubstituted, mono- or polysubstituted, wherein said 6 to 24-membered aryl is optionally connected through a -C₁-C₆-alkylene- or a -C₁-C₆-heteroalkylene-, which in each case is saturated or unsaturated and that is unsubstituted, mono- or polysubstituted;
(iv) a 5 to 24-membered heteroaryl that is unsubstituted, mono- or polysubstituted, wherein said 5 to 24-membered heteroaryl is optionally connected through a -C₁-C₆-alkylene- or a -C₁-C₆-heteroalkylene-, which in each case is saturated or unsaturated and which is unsubstituted, mono- or polysubstituted;
(v) a 3 to 24-membered cycloalkyl that is saturated or unsaturated and that is unsubstituted, mono- or polysubstituted, wherein said 3 to 24-membered cycloalkyl is optionally connected through a -C₁-C₆-alkylene- or a -C₁-C₆-heteroalkylene-, which in each case is saturated or unsaturated and which is unsubstituted, mono- or polysubstituted; and
(vi) a 3 to 24-membered heterocycloalkyl that is saturated or unsaturated and that is unsubstituted, mono- or polysubstituted, wherein said 3 to 24-membered heterocycloalkyl is optionally connected through a -C₁-C₆-alkylene- or a -C₁-C₆-heteroalkylene-, which in each case is saturated or unsaturated and which is unsubstituted, mono- or polysubstituted;
- R₄ is selected from the group consisting of
(i) a -C₁-C₆-alkylene- that is saturated or unsaturated and that is unsubstituted, mono- or polysubstituted;
(ii) a -C₁-C₆-heteroalkylene- that is saturated or unsaturated and that is unsubstituted, mono- or polysubstituted; and
(iii) a 6 to 14-membered arylene that is unsubstituted, mono- or polysubstituted;
wherein *"mono- or polysubstituted'* means substituted with one substituent, in case of "monosubstituted", or with more than one substituent, in case of "polysubstituted", and wherein the substituents are selected independently from the group consisting of -F, -Cl, -Br, -I, -CN, =O, -CF₃, -CF₂H, -CFH₂, -CF₂Cl, -CFCl₂, a -C₁-C₁₈-alkyl that is saturated or unsaturated and that is unsubstituted, and a -C₁-C₁₈-heteroalkyl that is saturated or unsaturated and that is unsubstituted.

4. The carboxy-terminated polymer according to any one of the preceding claims wherein
- R₁ is a -C₁-C₆-alkylene- that is saturated or unsaturated and that is unsubstituted;
- R₂ is a -C₁-C₆-alkyl that is saturated or unsaturated and that is unsubstituted;
- R₃ is a -C₁-C₆-alkyl that is saturated or unsaturated and that is unsubstituted; and
- R₄ is a -C₁-C₆-alkylene- that is saturated or unsaturated and that is either unsubstituted, mono- or polysubstituted;
wherein *"mono- or polysubstituted'* means substituted with one substituent in case of "monosubstituted" or more than one substituent in case of "polysubstituted" and wherein the substituents are selected independently from the group consisting of -F, -Cl, -Br, -I, -CN, - CF₃, -CF₂H, -CFH₂, -CF₂Cl, -CFCl₂, a -C₁-C₁₈-alkyl that is saturated or unsaturated and that is unsubstituted, and a -C₁-C₁₈-heteroalkyl that is saturated or unsaturated and that is unsubstituted.

5. The carboxy-terminated polymer according to any one of the preceding claims, wherein R₁ is a -C₁-C₆-alkylene- that is saturated or unsaturated and that is unsubstituted; R₂ is a -C₁-C₆-alkyl that is saturated or unsaturated and that is unsubstituted; R₃ is a -C₁-C₆-alkyl that is saturated or unsaturated and that is unsubstituted; and R₄ is a -C₁-C₆-alkylene- that is saturated or unsaturated and that is either unsubstituted, mono- or polysubstituted; wherein *"mono- or polysubstituted'* means substituted with one substituent in case of "monosubstituted" or more than one substituent in case of "polysubstituted" and wherein the substituents are selected independently from the group consisting of a -C₁-C₁₈-alkyl that is saturated and unsubstituted or a -C₁-C₆-alkyl-Si(O-C₁-C₆-alkyl)₃, wherein in each case the - C₁-C₆-alkyl is saturated or unsaturated.

6. The carboxy-terminated polymer according to any of the preceding claims, wherein the polymer is obtainable by a copolymerization of 1,3-butadiene with styrene and wherein R₁ is a -C₁-C₃-alkylene-, that is saturated or unsaturated and that is unsubstituted; R₂ is a -C₁-C₂-alkyl, that is saturated or unsaturated and that is unsubstituted; R₃ is a -C₁-C₂-alkyl that is saturated or unsaturated and that is unsubstituted and R₄ is a -C₁-C₃-alkylene- that is saturated or unsaturated and that is unsubstituted, mono- or polysubstituted; wherein *"mono-or polysubstituted'* means substituted with one substituent in case of "monosubstituted" or more than one substituent in case of "polysubstituted" and wherein the substituents are selected independently from the group consisting of a -C₁-C₁₈-alkyl that is saturated or unsaturated and that is unsubstituted, and a -C₁-C₆-alkyl-Si(O-C₁-C₆-alkyl)₃ that is saturated.

7. The carboxy-terminated polymer according to any one of the preceding claims, wherein the polymer is obtainable by a copolymerization of 1,3-butadiene with styrene and wherein R₁ is a -C₁-C₃-alkylene- that is saturated or unsaturated and that is unsubstituted; R₂ is a -C₁-C₂-alkyl that is saturated or unsaturated and that is unsubstituted; R₃ is -C₁-C₂-alkyl that is saturated or unsaturated and that is unsubstituted; and R₄ is selected from -CH₂-CHCₖH₂ₖ₊₁-, -CH₂CH((CH₂)₁₋₅Si(OC₁-C₄-alkyl)₃-, -CH=C(C₁-C₄-alkyl)-, and -(CH₂)₂₋₄-, wherein k is an integer of from 8 to 16.

8. The carboxy-terminated polymer according to any of the preceding claims, being present as a carboxylate according to general formula (II), 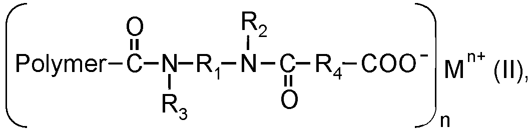 wherein
polymer, R₁, R₂, R₃ and R₄ are as defined in any one of the preceding claims;
n is an integer from 1 to 4; and
M is a metal or semi-metal of valency 1 to 4 selected from Li, Na, K, Mg, Ca, Zn, Fe, Co, Ni, Al, Nd, Ti, Sn, Si, Zr, V, Mo or W.

9. A method for the preparation of a carboxy-terminated polymer according to general formula (I), 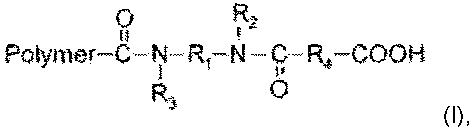 or general formula (II), 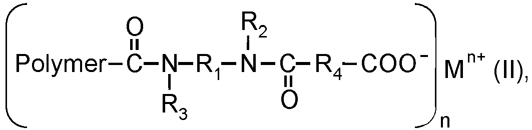 the method comprising:
(a) providing a polymer containing at least one carbon-carbon double bond by a polymerization comprising a copolymerization of 1,3-butadiene with styrene;
(b) providing a cyclic urea derivative of the general formula (III) 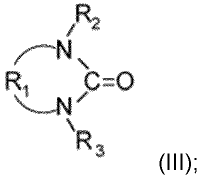
(c) providing a cyclic carboxylic anhydride of the general formula (IV) 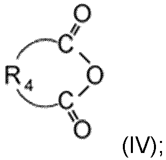
(d) adding the cyclic urea derivative of general formula (III) to the polymer as a first functionalization reagent to form a functionalized polymer intermediate; and
(e) subsequently adding the cyclic carboxylic anhydride of the general formula (IV) to the functionalized polymer intermediate as a second functionalization reagent to form the carboxy-terminated polymer according to general formula (I) or (II);
wherein polymer, n, M, R₁, R₂, R₃ and R₄ are as defined in any one of claims 1 to 8.

10. The method according to claim 8, wherein step (a) is performed by an anionic solution polymerization, or a polymerization using a coordination catalyst, wherein the coordination catalyst is preferably a Ziegler-Natta catalyst or a monometallic catalyst system.

11. The method according to claim 9 or 10, wherein step (a) is performed in the presence of a solvent, wherein the solvent is preferably selected from the group consisting of cyclohexane, methylcyclopentane, n-hexane and mixtures thereof; and/or an initiator, which is preferably n-butyllithium or sec-butyllithium.

12. The method according to any of claims 9 to 11, wherein step (a) is performed within a period of 10 minutes to 8 hours, preferably 20 minutes to 4 hours.

13. The method according to any of claims 9 to 12, which comprises the additional step(s) of adding
(f) a coupling reagent before, together with or after addition of the cyclic urea derivative of general formula (III), wherein the coupling reagent is preferably selected from the group consisting of silicon tetrachloride, methyltrichlorosilane, dimethyldichlorosilane, tin tetrachloride, dibutyltin dichloride, tetraalkoxysilanes, ethylene glycol diglycidyl ether and 1,2,4-tris(chloromethyl)benzene; and/or
(g) an antioxidant after the cyclic urea derivative of the general formula (III) and the cyclic carboxylic anhydride of general formula (IV) have been added, wherein the antioxidant is preferably selected from the group consisting of sterically hindered phenols, aromatic amines, phosphites and thioethers; and/or
(h) an extender oil, wherein the extender oil is preferably selected from the group consisting of a TDAE (Treated Distillate Aromatic Extract)-, a MES (Mild Extraction Solvates)-, a RAE (Residual Aromatic Extract)-, a TRAE (Treated Residual Aromatic Extract)-, a naphthenic and a heavy naphthenic oil; and/or
(i) a filler, which is preferably carbon black or silica; and/or
(j) rubbers and/or rubber additives.

14. A molded article, preferably a tire, prepared by vulcanizing a vulcanizable composition comprising the carboxy-terminated polymer of any one of claims 1 to 8.

## Patentansprüche

1. Carboxyterminiertes Polymer gemäß der allgemeinen Formel (I), 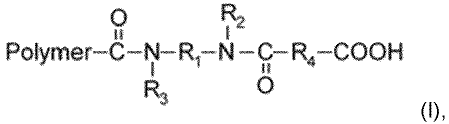
wobei das Polymer ein Dienkautschuk ist und mindestens eine Kohlenstoff-Kohlenstoff-Doppelbindung enthält und wobei
R₂, R₃ gleich oder verschieden sind und für gesättigte oder ungesättigte organische Reste, die ein oder mehrere aus der Gruppe bestehend aus O, N**,** S und Si ausgewählte Heteroatome enthalten können, stehen; und
R₁, R₄ gleich oder verschieden sind und für gesättigte oder ungesättigte zweiwertige organische Reste, die zusätzlich zu C und H ein oder mehrere aus der Gruppe bestehend aus O, N, S und Si ausgewählte Heteroatome enthalten können, stehen, und
wobei das Polymer durch eine Copolymerisation von konjugierten Dienen und vinylaromatischen Monomeren erhältlich ist, wobei die konjugierten Diene 1,3-Butadien umfassen und die vinylaromatischen Monomere Styrol umfassen.

2. Carboxyterminiertes Polymer nach Anspruch 1, wobei das Polymer durch eine Copolymerisation von 1,3-Butadien mit Styrol erhältlich ist.

3. Carboxyterminiertes Polymer nach einem der vorhergehenden Ansprüche, wobei
- R₁ ausgewählt ist aus der Gruppe bestehend aus
(i) einem -C₁-C₆-Alkylen-, das gesättigt oder ungesättigt ist und das unsubstituiert, einfach substituiert oder mehrfach substituiert ist;
(ii) einem -C₁-C₆-Heteroalkylen-, das gesättigt oder ungesättigt ist und das unsubstituiert, einfach substituiert oder mehrfach substituiert ist;
(iii) einem 6- bis 14-gliedrigen Arylen, das unsubstituiert, einfach substituiert oder mehrfach substituiert ist;
- R₂ ausgewählt ist aus der Gruppe bestehend aus
(i) einem -C₁-C₂₄-Alkyl, das gesättigt oder ungesättigt ist und das unsubstituiert, einfach substituiert oder mehrfach substituiert ist; oder
(ii) einem -C₁-C₂₄-Heteroalkyl, das gesättigt oder ungesättigt ist und das unsubstituiert, einfach substituiert oder mehrfach substituiert ist;
(iii) einem 6- bis 24-gliedrigen Aryl, das unsubstituiert, einfach substituiert oder mehrfach substituiert ist, wobei das 6-bis 24-gliedrige Aryl gegebenenfalls über ein -C₁-C₆-Alkylen- oder ein -C₁-C₆-Heteroalkylen-, das jeweils gesättigt oder ungesättigt ist und das unsubstituiert, einfach substituiert oder mehrfach substituiert ist, gebunden ist;
(iv) einem 5- bis 24-gliedrigen Heteroaryl, das unsubstituiert, einfach substituiert oder mehrfach substituiert ist, wobei das 5- bis 24-gliedrige Heteroaryl gegebenenfalls über ein -C₁-C₆-Alkylen- oder ein -C₁-C₆-Heteroalkylen-, das jeweils gesättigt oder ungesättigt ist und das unsubstituiert, einfach substituiert oder mehrfach substituiert ist, gebunden ist;
(v) einem 3- bis 24-gliedrigen Cycloalkyl, das gesättigt oder ungesättigt ist und das unsubstituiert, einfach substituiert oder mehrfach substituiert ist, wobei das 3-bis 24-gliedrige Cycloalkyl gegebenenfalls über ein -C₁-C₆-Alkylen- oder ein -C₁-C₆-Heteroalkylen-, das jeweils gesättigt oder ungesättigt ist und das unsubstituiert, einfach substituiert oder mehrfach substituiert ist, gebunden ist; und
(vi) einem 3- bis 24-gliedrigen Heterocycloalkyl, das gesättigt oder ungesättigt ist und das unsubstituiert, einfach substituiert oder mehrfach substituiert ist, wobei das 3- bis 24-gliedrige Heterocycloalkyl gegebenenfalls über -C₁-C₆-Alkylen- oder -C₁-C₆-Heteroalkylen-, das jeweils gesättigt oder ungesättigt ist und das unsubstituiert, einfach substituiert oder mehrfach substituiert ist, gebunden ist;
- R₃ ausgewählt ist aus der Gruppe bestehend aus
(i) -C₁-C₂₄-Alkyl, das gesättigt oder ungesättigt ist und das unsubstituiert, einfach substituiert oder mehrfach substituiert ist;
(ii) -C₁-C₂₄-Heteroalkyl, das gesättigt oder ungesättigt ist und das unsubstituiert, einfach substituiert oder mehrfach substituiert ist;
(iii) 6- bis 24-gliedrigem Aryl, das unsubstituiert, einfach substituiert oder mehrfach substituiert ist, wobei das 6-bis 24-gliedrige Aryl gegebenenfalls über ein -C₁-C₆-Alkylen- oder ein -C₁-C₆-Heteroalkylen-, das jeweils gesättigt oder ungesättigt ist und das unsubstituiert, einfach substituiert oder mehrfach substituiert ist, gebunden ist;
(iv) einem 5- bis 24-gliedrigen Heteroaryl, das unsubstituiert, einfach substituiert oder mehrfach substituiert ist, wobei das 5- bis 24-gliedrige Heteroaryl gegebenenfalls über ein -C₁-C₆-Alkylen- oder ein -C₁-C₆-Heteroalkylen-, das jeweils gesättigt oder ungesättigt ist und das unsubstituiert, einfach substituiert oder mehrfach substituiert ist, gebunden ist;
(v) einem 3- bis 24-gliedrigen Cycloalkyl, das gesättigt oder ungesättigt ist und das unsubstituiert, einfach substituiert oder mehrfach substituiert ist, wobei das 3-bis 24-gliedrige Cycloalkyl gegebenenfalls über ein -C₁-C₆-Alkylen- oder ein -C₁-C₆-Heteroalkylen-, das jeweils gesättigt oder ungesättigt ist und das unsubstituiert, einfach substituiert oder mehrfach substituiert ist, gebunden ist; und
(vi) einem 3- bis 24-gliedrigen Heterocycloalkyl, das gesättigt oder ungesättigt ist und das unsubstituiert, einfach substituiert oder mehrfach substituiert ist, wobei das 3- bis 24-gliedrige Heterocycloalkyl gegebenenfalls über ein -C₁-C₆-Alkylen- oder ein -C₁-C₆-Heteroalkylen-, das jeweils gesättigt oder ungesättigt ist und das unsubstituiert, einfach substituiert oder mehrfach substituiert ist, gebunden ist;
- R₄ ausgewählt ist aus der Gruppe bestehend aus
(i) einem -C₁-C₆-Alkylen-, das gesättigt oder ungesättigt ist und das unsubstituiert, einfach substituiert oder mehrfach substituiert ist;
(ii) einem -C₁-C₆-Heteroalkylen-, das gesättigt oder ungesättigt ist und das unsubstituiert, einfach substituiert oder mehrfach substituiert ist; und
(iii) einem 6- bis 14-gliedrigen Arylen, das unsubstituiert, einfach substituiert oder mehrfach substituiert ist;
wobei *"einfach substituiert oder mehrfach substituiert"* im Fall von *"einfach* substituiert" mit einem Substituenten substituiert bedeutet bzw. im Fall von "mehrfach substituiert" mit mehr als einem Substituenten substituiert bedeutet und wobei die Substituenten unabhängig voneinander aus der Gruppe bestehend aus -F, -Cl, -Br, -I, -CN, =O, -CF₃, - CF₂H, -CFH₂, -CF₂Cl, -CFCl₂, einem -C₁-C₁₈-Alkyl, das gesättigt oder ungesättigt ist und das unsubstituiert ist, und einem -C₁-C₁₈-Heteroalkyl, das gesättigt oder ungesättigt ist und das unsubstituiert ist, ausgewählt sind.

4. Carboxyterminiertes Polymer nach einem der vorhergehenden Ansprüche, wobei
- R₁ für ein -C₁-C₆-Alkylen-, das gesättigt oder ungesättigt ist und das unsubstituiert ist, steht;
- R₂ für ein -C₁-C₆-Alkyl, das gesättigt oder ungesättigt ist und das unsubstituiert ist, steht;
- R₃ für ein -C₁-C₆-Alkyl, das gesättigt oder ungesättigt ist und das unsubstituiert ist, steht; und
- R₄ für ein -C₁-C₆-Alkylen-, das gesättigt oder ungesättigt ist und das entweder unsubstituiert, einfach substituiert oder mehrfach substituiert ist, steht;
wobei *"einfach substituiert oder mehrfach substituiert"* im Fall von *"einfach* substituiert" mit einem Substituenten substituiert bedeutet bzw. im Fall von "mehrfach substituiert" mit mehr als einem Substituenten substituiert bedeutet und wobei die Substituenten unabhängig voneinander aus der Gruppe bestehend aus -F, -Cl, -Br, -I, -CN, -CF₃, -CF₂H, - CFH₂, -CF₂Cl, -CFCl₂, einem C₁-C₁₈-Alkyl, das gesättigt oder ungesättigt ist und das unsubstituiert ist, und einem -C₁-C₁₈-Heteroalkyl, das gesättigt oder ungesättigt ist und das unsubstituiert ist, ausgewählt sind.

5. Carboxyterminiertes Polymer nach einem der vorhergehenden Ansprüche, wobei R₁ für ein -C₁-C₆-Alkylen-, das gesättigt oder ungesättigt ist und das unsubstituiert ist, steht; R₂ für ein -C₁-C₆-Alkyl, das gesättigt oder ungesättigt ist und das unsubstituiert ist, steht; R₃ für ein -C₁-C₆-Alkyl, das gesättigt oder ungesättigt ist und das unsubstituiert ist, steht; und R₄ für ein -C₁-C₆-Alkylen-, das gesättigt oder ungesättigt ist und das entweder unsubstituiert, einfach substituiert oder mehrfach substituiert ist, steht; wobei *"einfach substituiert oder mehrfach substituiert"* im Fall von *"einfach* substituiert" mit einem Substituenten substituiert bedeutet bzw. im Fall von "mehrfach substituiert" mit mehr als einem Substituenten substituiert bedeutet und wobei die Substituenten unabhängig voneinander aus der Gruppe bestehend aus einem -C₁-C₁₈-Alkyl, das gesättigt und unsubstituiert ist, oder einem -C₁-C₆-Alkyl-Si(O-C₁-C₆-alkyl)₃ ausgewählt sind, wobei das -C₁-C₆-Alkyl jeweils gesättigt oder ungesättigt ist.

6. Carboxyterminiertes Polymer nach einem der vorhergehenden Ansprüche, wobei das Polymer durch eine Copolymerisation von 1,3-Butadien mit Styrol erhältlich ist und wobei R₁ für ein -C₁-C₃-Alkylen-, das gesättigt oder ungesättigt ist und das unsubstituiert ist, steht; R₂ für ein -C₁-C₂-Alkyl, das gesättigt oder ungesättigt ist und das unsubstituiert ist, steht; R₃ für ein -C₁-C₂-Alkyl, das gesättigt oder ungesättigt ist und das unsubstituiert ist, steht und R₄ für ein -C₁-C₃-Alkylen-, das gesättigt oder ungesättigt ist und das unsubstituiert, einfach substituiert oder mehrfach substituiert ist, steht; wobei *"einfach substituiert oder mehrfach substituiert"* im Fall von *"einfach* substituiert" mit einem Substituenten substituiert bedeutet bzw. im Fall von "mehrfach substituiert" mit mehr als einem Substituenten substituiert bedeutet und wobei die Substituenten unabhängig voneinander aus der Gruppe bestehend aus einem -C₁-C₁₈-Alkyl, das gesättigt oder ungesättigt ist und das unsubstituiert ist, und einem -C₁-C₆-Alkyl-Si(O-C₁-C₆-alkyl)₃, das gesättigt ist, ausgewählt sind.

7. Carboxyterminiertes Polymer nach einem der vorhergehenden Ansprüche, wobei das Polymer durch eine Copolymerisation von 1,3-Butadien mit Styrol erhältlich ist und wobei R₁ für ein -C₁-C₃-Alkylen-, das gesättigt oder ungesättigt ist und das unsubstituiert ist, steht; R₂ für ein -C₁-C₂-Alkyl, das gesättigt oder ungesättigt ist und das unsubstituiert ist, steht; R₃ für ein -C₁-C₂-Alkyl, das gesättigt oder ungesättigt ist und das unsubstituiert ist, steht; und R₄ aus -CH₂-CHCₖH₂ₖ₊₁-, -CH₂CH((CH₂)₁₋₅Si(OC₁-C₄-Alkyl)₃-, -CH=C (C₁-C₄-Alkyl) - und - (CH₂)₂₋₄- ausgewählt ist, wobei k für eine ganze Zahl von 8 bis 16 steht.

8. Carboxyterminiertes Polymer nach einem der vorhergehenden Ansprüche, das als Carboxylat gemäß der allgemeinen Formel (II) vorliegt, 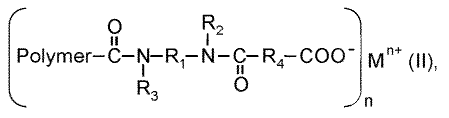 wobei
Polymer, R₁, R₂, R₃ und R₄ wie in einem der vorhergehenden Ansprüche definiert sind;
n für eine ganze Zahl von 1 bis 4 steht; und
M für ein Metall oder Halbmetall mit einer Wertigkeit von 1 bis 4, das aus Li, Na, K, Mg, Ca, Zn, Fe, Co, Ni, Al, Nd, Ti, Sn, Si, Zr, V, Mo oder W ausgewählt ist, steht.

9. Verfahren zur Herstellung eines carboxyterminierten Polymers gemäß der allgemeinen Formel (I), 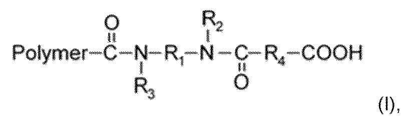 oder der allgemeinen Formel (II), 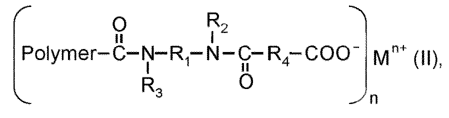 wobei das Verfahren Folgendes umfasst:
(a) Bereitstellen eines Polymers mit mindestens einer Kohlenstoff-Kohlenstoff-Doppelbindung durch eine Polymerisation, die eine Copolymerisation von 1,3-Butadien mit Styrol umfasst;
(b) Bereitstellen eines cyclischen Harnstoffderivats der allgemeinen Formel (III) 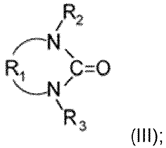
(C) Bereitstellen eines cyclischen Carbonsäureanhydrids der allgemeinen Formel (IV) 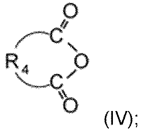
(d) Zugeben des cyclischen Harnstoffderivats der allgemeinen Formel (III) zu dem Polymer als erstes Funktionalisierungsreagenz zur Bildung eines funktionalisierten Polymerzwischenprodukts; und
(e) anschließendes Zugeben des cyclischen Carbonsäureanhydrids der allgemeinen Formel (IV) zu dem funktionalisierten Polymerzwischenprodukt als zweites Funktionalisierungsreagenz zur Bildung des carboxyterminierten Polymers gemäß der allgemeinen Formel (I) oder (II);
wobei Polymer, n, M, R₁, R₂, R₃ und R₄ wie in einem der Ansprüche 1 bis 8 definiert sind.

10. Verfahren nach Anspruch 8, wobei Schritt (a) durch eine anionische Lösungspolymerisation oder eine Polymerisation unter Verwendung eines Koordinationskatalysators durchgeführt wird, wobei es sich bei dem Koordinationskatalysator vorzugsweise um einen Ziegler-Natta-Katalysator oder ein monometallisches Katalysatorsystem handelt.

11. Verfahren nach Anspruch 9 oder 10, wobei Schritt (a) in Gegenwart eines Lösungsmittels, wobei das Lösungsmittel vorzugsweise aus der Gruppe bestehend aus Cyclohexan, Methylcyclopentan, n-Hexan und Mischungen davon ausgewählt wird; und/oder eines Initiators, bei dem es sich vorzugsweise um n-Butyllithium oder sec-Butyllithium handelt, durchgeführt wird.

12. Verfahren nach einem der Ansprüche 9 bis 11, wobei Schritt (a) innerhalb eines Zeitraums von 10 Minuten bis 8 Stunden, vorzugsweise 20 Minuten bis 4 Stunden, durchgeführt wird.

13. Verfahren nach einem der Ansprüche 9 bis 12, umfassend den zusätzlichen Schritt bzw. die zusätzlichen Schritte des Zugebens
(f) eines Kupplungsreagenz vor, zusammen mit oder nach der Zugabe des cyclischen Harnstoffderivats der allgemeinen Formel (III), wobei das Kupplungsreagenz vorzugsweise aus der Gruppe bestehend aus Siliciumtetrachlorid, Methyltrichlorsilan, Dimethyldichlorsilan, Zinntetrachlorid, Dibutylzinndichlorid, Tetraalkoxysilanen, Ethylenglykoldiglycidylether und 1,2,4-Tris(chlormethyl)benzol ausgewählt wird; und/oder
(g) eines Antioxidans nach der Zugabe des cyclischen Harnstoffderivats der allgemeinen Formel (III) und des cyclischen Carbonsäureanhydrids der allgemeinen Formel (IV), wobei das Antioxidans vorzugsweise aus der Gruppe bestehend aus sterisch gehinderten Phenolen, aromatischen Aminen, Phosphiten und Thioethern ausgewählt wird; und/oder
(h) eines Strecköls, wobei das Strecköl vorzugsweise aus der Gruppe bestehend aus einem TDAE(Treated Distillate Aromatic Extract), einem MES(Mild Extraction Solvates), einem RAE(Residual Aromatic Extract), einem TRAE(Treated Residual Aromatic Extract), einem naphthenischen Öl und einem schweren naphthenischen Öl ausgewählt ist; und/oder
(i) eines Füllstoffs, bei dem es sich vorzugsweise um Ruß oder Siliciumdioxid handelt; und/oder
(j) Kautschuken und/oder Kautschukadditiven.

14. Formkörper, vorzugsweise Reifen, hergestellt durch Vulkanisieren einer vulkanisierbaren Zusammensetzung, die das carboxyterminierte Polymer nach einem der Ansprüche 1 bis 8 umfasst.

## Revendications

1. Polymère terminé par carboxy selon la formule générale (I), 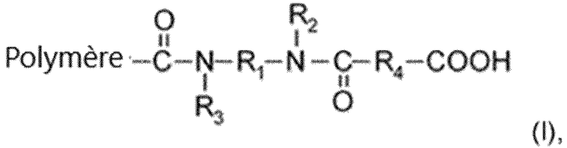
le polymère étant un caoutchouc de diène et contenant au moins une double liaison carbone-carbone et,
R₂, R₃ étant identiques ou différents et représentant des radicaux organiques saturés ou insaturés qui peuvent contenir un ou plusieurs hétéroatomes choisis dans le groupe constitué par O, N, S et Si ; et
R₁, R₄ étant identiques ou différents et représentant des radicaux organiques divalents saturés ou insaturés qui, en plus de C et H, peuvent contenir un ou plusieurs autres hétéroatomes choisis dans le groupe constitué par O, N, S et Si, et
le polymère pouvant être obtenu par une copolymérisation de diènes conjugués et de monomères vinylaromatiques, les diènes conjugués comprenant le 1,3-butadiène et les monomères vinylaromatiques comprenant le styrène.

2. Polymère terminé par carboxy selon la revendication 1, le polymère pouvant être obtenu par une copolymérisation de 1,3-butadiène avec le styrène.

3. Polymère terminé par carboxy selon l'une quelconque des revendications précédentes,
- R₁ étant choisi dans le groupe constitué par
(i) un -C₁₋C₆-alkylène qui est saturé ou insaturé et qui est soit non substitué, soit monosubstitué, soit polysubstitué ;
(ii) un -C₁₋C₆-hétéroalkylène qui est saturé ou insaturé et qui est non substitué, monosubstitué ou polysubstitué ; et
(iii) un arylène à 6 à 14 chaînons qui est non substitué, monosubstitué ou polysubstitué ;
- R₂ étant choisi dans le groupe constitué par
(i) un -C₁-C₂₄alkyle qui est saturé ou insaturé, et qui est non substitué, monosubstitué ou polysubstitué ; ou
(ii) un -C₁₋C₂₄-hétéroalkyle qui est saturé ou insaturé, et qui est non substitué, monosubstitué ou polysubstitué ;
(iii) un aryle à 6 à 24 chaînons qui est non substitué, monosubstitué ou polysubstitué, ledit aryle à 6 à 24 chaînons étant éventuellement relié par le biais d'un - C₁₋C₆-alkylène ou d'un -C₁₋C₆-hétéroalkylène, qui en chaque cas est saturé ou insaturé, et qui est non substitué, monosubstitué ou polysubstitué ;
(iv) un hétéroaryle à 5 à 24 chaînons qui est non substitué, monosubstitué ou polysubstitué, ledit hétéroaryle à 5 à 24 chaînons étant éventuellement relié par le biais d'un -C₁₋C₆-alkylène ou d'un -C₁₋C₆-hétéroalkylène, qui est en chaque cas saturé ou insaturé, et qui est non substitué, monosubstitué ou polysubstitué ;
(v) un cycloalkyle à 3 à 24 chaînons qui est saturé ou insaturé et qui est non substitué, monosubstitué ou polysubstitué, ledit cycloalkyle à 3 à 24 chaînons étant éventuellement relié par le biais d'un -C₁₋C₆-alkylène ou d'un -C₁₋C₆-hétéroalkylène, qui est en chaque cas saturé ou insaturé, et qui est non substitué, monosubstitué ou polysubstitué ; et
(vi) un hétérocycloalkyle à 3 à 24 chaînons qui est saturé ou insaturé et qui est non substitué, monosubstitué ou polysubstitué, ledit hétérocycloalkyle à 3 à 24 chaînons étant éventuellement relié par le biais de -C₁₋C₆-alkylène ou -C₁₋C₆-hétéroalkylène, qui est en chaque cas saturé ou insaturé, et qui est non substitué, monosubstitué ou polysubstitué ;
- R₃ étant choisi dans le groupe constitué par
(i) -C₁₋C₂₄-alkyle qui est saturé ou insaturé, et qui est non substitué, monosubstitué ou polysubstitué ;
(ii) -C₁₋C₂₄-hétéroalkyle qui est saturé ou insaturé, et qui est non substitué, monosubstitué ou polysubstitué ;
(iii) aryle à 6 à 24 chaînons qui est non substitué, monosubstitué ou polysubstitué, ledit aryle à 6 à 24 chaînons étant éventuellement relié par le biais d'un - C₁₋C₆-alkylène ou d'un -C₁₋C₆-hétéroalkylène, qui est en chaque cas saturé ou insaturé, et qui est non substitué, monosubstitué ou polysubstitué ;
(iv) un hétéroaryle à 5 à 24 chaînons qui est non substitué, monosubstitué ou polysubstitué, ledit hétéroaryle à 5 à 24 chaînons étant éventuellement relié par le biais d'un -C₁₋C₆-alkylène ou d'un -C₁₋C₆-hétéroalkylène, qui est en chaque cas saturé ou insaturé, et qui est non substitué, monosubstitué ou polysubstitué ;
(v) un cycloalkyle à 3 à 24 chaînons qui est saturé ou insaturé et qui est non substitué, monosubstitué ou polysubstitué, ledit cycloalkyle à 3 à 24 chaînons étant éventuellement relié par le biais d'un -C₁₋C₆-alkylène ou d'un -C₁₋C₆-hétéroalkylène, qui est en chaque cas saturé ou insaturé, et qui est non substitué, monosubstitué ou polysubstitué ; et
(vi) un hétérocycloalkyle à 3 à 24 chaînons qui est saturé ou insaturé et qui est non substitué, monosubstitué ou polysubstitué, ledit hétérocycloalkyle à 3 à 24 chaînons étant éventuellement relié par le biais d'un -C₁₋C₆-alkylène ou d'un -C₁₋C₆-hétéroalkylène, qui est en chaque cas saturé ou insaturé, et qui est non substitué, monosubstitué ou polysubstitué ;
- R₄ étant choisi dans le groupe constitué par
(i) un -C₁₋C₆-alkylène qui est saturé ou insaturé et qui est non substitué, monosubstitué ou polysubstitué ;
(ii) un -C₁₋C₆-hétéroalkylène qui est saturé ou insaturé et qui est non substitué, monosubstitué ou polysubstitué ; et
(iii) un arylène à 6 à 14 chaînons qui est non substitué, monosubstitué ou polysubstitué ;
« monosubstitué ou polysubstitué » signifiant substitué par un substituant, dans le cas de « monosubstitué », ou par plus d'un substituant, dans le cas de « polysubstitué », et les substituants étant choisis indépendamment dans le groupe constitué par -F, -Cl, -Br, -I, -CN, =O, -CF₃, -CF₂H, -CFH₂, -CF₂Cl, -CFCl₂, un -C₁₋C₁₈-alkyle qui est saturé ou insaturé et qui est non substitué, et un -C₁₋C₁₈-hétéroalkyle qui est saturé ou insaturé et qui est non substitué.

4. Polymère terminé par carboxy selon l'une quelconque des revendications précédentes,
- R₁ étant un -C₁₋C₆-alkylène qui est saturé ou insaturé et qui est non substitué ;
- R₂ étant un -C₁₋C₆-alkyle qui est saturé ou insaturé et qui est non substitué ;
- R₃ étant un -C₁₋C₆-alkyle qui est saturé ou insaturé et qui est non substitué ; et
- R₄ étant un -C₁₋C₆-alkylène qui est saturé ou insaturé et qui est soit non substitué, soit monosubstitué, soit polysubstitué ;
« monosubstitué ou polysubstitué » signifiant substitué par un substituant, dans le cas de « monosubstitué », ou par plus d'un substituant, dans le cas de « polysubstitué », et les substituants étant choisis indépendamment dans le groupe constitué par -F, -Cl, -Br, -I, -CN, -CF₃, - CF₂H, -CFH₂, -CF₂Cl, -CFCl₂, un -C₁₋C₁₈-alkyle qui est saturé ou insaturé et qui est non substitué, et un -C₁₋C₁₈-hétéroalkyle qui est saturé ou insaturé et qui est non substitué.

5. Polymère terminé par carboxy selon l'une quelconque des revendications précédentes, R₁ étant un -C₁₋C₆-alkylène qui est saturé ou insaturé et qui est non substitué ; R₂ étant un -C₁₋C₆-alkyle qui est saturé ou insaturé et qui est non substitué ; R₃ étant un -C₁₋C₆-alkyle qui est saturé ou insaturé et qui est non substitué ; et R₄ étant un -C₁₋C₆-alkylène qui est saturé ou insaturé et qui est soit non substitué, soit monosubstitué soit polysubstitué ; « monosubstitué ou polysubstitué » signifiant substitué par un substituant, dans le cas de « monosubstitué », ou par plus d'un substituant, dans le cas de « polysubstitué », et les substituants étant choisis indépendamment dans le groupe constitué par un - C₁-C₁₈-alkyle qui est saturé et non substitué ou un -C₁-C₆-alkyl-Si(O-C₁-C₆-alkyle)₃, en chaque cas le -C₁-C₆-alkyle étant saturé ou insaturé.

6. Polymère terminé par carboxy selon l'une quelconque des revendications précédentes, le polymère pouvant être obtenu par une copolymérisation de 1,3-butadiène avec le styrène et, R₁ étant un -C₁₋C₃-alkylène qui est saturé ou insaturé et qui est non substitué ; R₂ étant un -C₁₋C₂-alkyle qui est saturé ou insaturé et qui est non substitué ; R₃ étant un -C₁₋C₂-alkyle qui est saturé ou insaturé et qui est non substitué ; et R₄ étant un -C₁₋C₃-alkylène qui est saturé ou insaturé et qui est non substitué, monosubstitué ou polysubstitué ; « monosubstitué ou polysubstitué » signifiant substitué par un substituant, dans le cas de « monosubstitué », ou par plus d'un substituant, dans le cas de « polysubstitué », et les substituants étant choisis indépendamment dans le groupe constitué par un -C₁₋C₁₈-alkyle qui est saturé ou insaturé et non substitué, et un -C₁-C₆-alkyl-Si (O-C₁-C₆-alkyle)₃ qui est saturé.

7. Polymère terminé par carboxy selon l'une quelconque des revendications précédentes, le polymère pouvant être obtenu par une copolymérisation de 1,3-butadiène avec le styrène et, R₁ étant un -C₁₋C₃-alkylène qui est saturé ou insaturé et qui est non substitué ; R₂ étant un -C₁₋C₂-alkyle qui est saturé ou insaturé et qui est non substitué ; R₃ étant un -C₁-C₂-alkyle qui est saturé ou insaturé et qui est non substitué ; et R₄ étant choisi parmi -CH₂-CHCₖH₂ₖ₊₁, -CH₂CH((CH₂)₁₋₅Si(OC₁-C₄alkyle)₃, -CH=C (C₁-C₄-alkyle), et -(CH₂)₂₋₄, k étant un entier allant de 8 à 16.

8. Polymère terminé par carboxy selon l'une quelconque des revendications précédentes, qui est présent en tant qu'un carboxylate selon la formule générale (II), 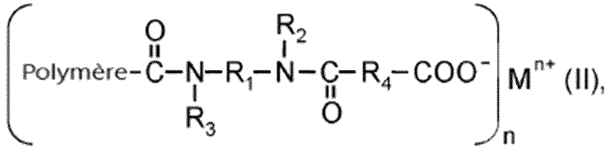
le polymère, R₁, R₂, R₃ et R₄ étant tels que définis dans l'une quelconque des revendications précédentes ;
n étant un entier de 1 à 4 ; et
M étant un métal ou un semi-métal de valence 1 à 4 choisi parmi Li, Na, K, Mg, Ca, Zn, Fe, Co, Ni, Al, Nd, Ti, Sn, Si, Zr, V, Mo ou W.

9. Procédé pour la préparation d'un polymère terminé par carboxy selon la formule générale (I), 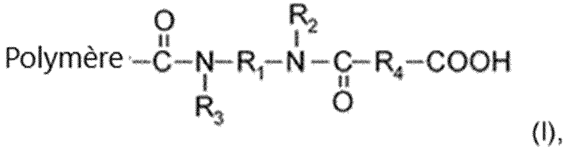 ou la formule générale (II) 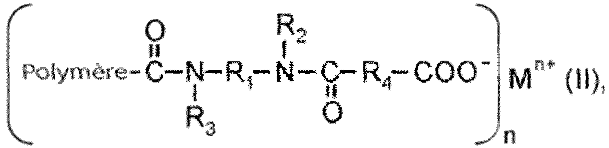 le procédé comprenant :
(a) la fourniture d'un polymère contenant au moins une double liaison carbone-carbone par une polymérisation comprenant une copolymérisation de 1,3-butadiène avec le styrène ;
(b) la fourniture d'un dérivé d'urée cyclique de la formule générale (III) 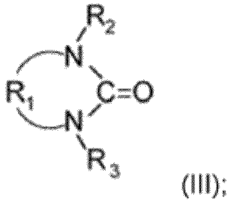
(c) la fourniture d'un anhydride carboxylique cyclique de la formule générale (IV) 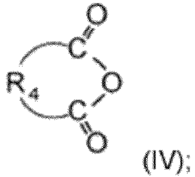
(d) l'ajout du dérivé d'urée cyclique de formule générale (III) au polymère en tant qu'un premier réactif de fonctionnalisation pour former un intermédiaire de polymère fonctionnalisé ; et
(e) subséquemment l'ajout de l'anhydride carboxylique cyclique de la formule générale (IV) à l'intermédiaire de polymère fonctionnalisé en tant qu'un deuxième réactif de fonctionnalisation pour former le polymère terminé par carboxy selon la formule générale (I) ou (II) ;
le polymère, n, M, R₁, R₂, R₃ et R₄ étant tels que définis dans l'une quelconque des revendications 1 à 8.

10. Procédé selon la revendication 8, l'étape (a) étant réalisée par une polymérisation en solution anionique, ou une polymérisation utilisant un catalyseur de coordination, le catalyseur de coordination étant préférablement un catalyseur Ziegler-Natta ou un système de catalyseur monométallique.

11. Procédé selon la revendication 9 ou 10, l'étape (a) étant réalisée en la présence d'un solvant, le solvant étant préférablement choisi dans le groupe constitué par le cyclohexane, le méthylcyclopentane, le n-hexane et des mélanges correspondants ; et/ou un initiateur, qui est préférablement le n-butyllithium ou le sec-butyllithium.

12. Procédé selon l'une quelconque des revendications 9 à 11, l'étape (a) étant réalisée dans une période de 10 minutes à 8 heures, préférablement 20 minutes à 4 heures.

13. Procédé selon l'une quelconque des revendications 9 à 12, qui comprend l'étape ou les étapes supplémentaires d'ajout
(f) d'un réactif de couplage avant, ensemble avec ou après l'ajout du dérivé d'urée cyclique de formule générale (III), le réactif de couplage étant préférablement choisi dans le groupe constitué par le tétrachlorure de silicium, le méthyltrichlorosilane, le diméthyldichlorosilane, le tétrachlorure d'étain, le dichlorure de dibutylétain, des tétraalcoxysilanes, l'éther de diglycidyle d'éthylène glycol et le 1,2,4-tris(chlorométhyl)benzène ; et/ou
(g) d'un antioxydant après que le dérivé d'urée cyclique de la formule générale (III) et que l'anhydride carboxylique cyclique de formule générale (IV) ont été ajoutés, l'antioxydant étant préférablement choisi dans le groupe constitué par des phénols stériquement encombrés, des amines aromatiques, des phosphites et des thioéthers ; et/ou
(h) d'une huile d'extension, l'huile d'extension étant préférablement choisie dans le groupe constitué par un TDAE (extrait aromatique de distillat traité), un MES (solvates d'extraction légère), un RAE (extrait aromatique résiduel), un TRAE (extrait aromatique résiduel traité), une huile naphténique et une huile naphténique lourde ; et/ou
(i) d'une charge, qui est préférablement du noir de carbone ou une silice ; et/ou
(j) de caoutchoucs et/ou d'additifs de caoutchouc.

14. Article moulé, préférablement un pneu, préparé par vulcanisation d'une composition vulcanisable comprenant le polymère terminé par carboxy selon l'une quelconque des revendications 1 à 8.
